# EUROPEAN PATENT SPECIFICATION

(11) **EP 3 729 397 B1**
(45) Date of publication and mention of the grant of the patent: **28.08.2024**
(21) Application number: 18704876.4
(22) Date of filing: 23.01.2018
(51) Int. Cl.: G08G 1/01, G08G 1/16, G08G 1/00, G08G 1/04, G08G 1/054, G06F 18/2413, G06V 10/82, G06V 20/54

(54) **SYSTEM, DEVICE AND METHOD FOR DETECTING ABNORMAL TRAFFIC EVENTS IN A GEOGRAPHICAL LOCATION**
SYSTEM, VORRICHTUNG UND VERFAHREN ZUR ERFASSUNG ABNORMALER VERKEHRSEREIGNISSE AN EINEM GEOGRAPHISCHEN ORT
SYSTÈME, DISPOSITIF ET PROCÉDÉ DE DÉTECTION D'ÉVÉNEMENTS DE TRAFIC ANORMAL DANS UN EMPLACEMENT GÉOGRAPHIQUE

(43) Date of publication of application: 28.10.2020
(73) Proprietor: Yunex GmbH, 81739 München (DE)
(72) Inventor: RAVEENDRAN, Varsha, 560062 Bangalore (IN); SUDHAKARAN, Vinay, 560076 Bangalore (IN); SOORAJ P S, Arun, 560099 Bangalore (IN); YESHWANTH, Chandan, 560072 Bangalore (IN)
(74) Representative: Patentanwaltskanzlei WILHELM & BECK
(86) International application number: PCT/EP2018/051573
(87) International publication number: WO 2019/145018

(56) References cited:
- EP-A2- 3 188 150
- US-A1- 2012 134 532
- US-A1- 2013 286 208
- US-A1- 2015 332 097

## Description

### Field

The present disclosure relates to systems, devices, and methods for detecting abnormal traffic events in a geographical location.

### Background

With increase in the number of vehicles, monitoring roads for abnormalities such as accidents and traffic violations has become a daunting task. In a chaotic traffic scenario, identifying abnormalities maybe challenging as it requires accurate classification abnormality as accident, or violation or simply normal chaotic traffic flow.

A centralized traffic control system is used for storing and processing large volumes of traffic data. Such centralized traffic control system relies on human intervention.

Further, abnormal traffic event detection maybe performed on individual vehicles as disclosed in US 20160284214. The document describes a travel reporter system for reporting abnormal travel events. The travel reporter system includes an electronic data sensor mounted on a vehicle and configured to obtain real-time data about an object located within a predetermined distance of the vehicle. Such decision support systems are limited to the vicinity of the vehicle. To determine abnormal traffic events a geographical location maybe cumbersome and expensive as the decision support systems must be provided to the vehicles in the geographical location.

US 2012/134532 A1 discloses a system and a method for abnormal behaviour detection using automatic classification of multiple features. Features from various sources, including those extracted from camera input through digital image analysis, are used as input to machine learning algorithms. These algorithms group the features and produce models of normal and abnormal behaviours. Once created, these models can be used to automatically classify features as normal or abnormal. The system and method is suitable for use in the automatic detection of abnormal traffic behaviour such as running of red lights, driving in the wrong lane, or driving against traffic regulations.

EP 3 188 150 A2 discloses an onboard vehicle system capable of gathering driver behaviour to be provided to a service provider computer. The onboard vehicle system includes one or more input sensors, such as camera devices, configured to capture image information surrounding the onboard system. Upon detecting another vehicle within the image information, the onboard system may determine a vehicle identifier and determine, based on the vehicle's movements, that the vehicle is exhibiting anomalous behaviour. Upon detecting anomalous behaviour of a vehicle within its vicinity, the onboard system may transmit an indication of the anomalous behaviour and a vehicle identifier to the service provider computer to be stored in a database.

US 2015/332097 A1 discloses a method for detecting a vehicle running a stop signal positioned at an intersection includes acquiring a sequence of frames from at least one video camera monitoring an intersection being signalled by the stop signal. The method includes defining a first region of interest (ROI) including a road region located before the intersection on the image plane. The method includes searching the first ROI for a candidate violating vehicle. In response to detecting the candidate violating vehicle, the method includes tracking at least one trajectory of the detected candidate violating vehicle across a number of frames. The method includes classifying the candidate violating vehicle as belonging to one of a violating vehicle and a non-violating vehicle based on the at least one trajectory.

US 2013/286208 A1 discloses methods and systems for automatically detecting multi-object anomalies at a traffic intersection utilizing a joint sparse reconstruction model. A first input video sequence at a first traffic location can be received and at least one normal event involving P moving objects (where P is greater than or equal to 1) can be identified in an offline training phase. The normal event in the first input video sequence can be assigned to at least one normal event class and a training dictionary suitable for joint sparse reconstruction can be built in the offline training phase. A second input video sequence captured at a second traffic location similar to the first traffic location can be received and at least one event involving P moving objects can be identified in an online detection phase.

In light of the above there exists a need to accurately identify and mitigate impact of abnormal traffic events in a geographical location. Therefore, it is an object of the present invention to provide a method, a device and a system for effectively detecting abnormal traffic events in real-time traffic flow.

### Summary

The invention is defined by the independent claims. The dependent claims define advantageous embodiments. The method, device and system according to the present invention achieve the aforementioned object by determining a traffic activity of by tracking traffic objects in a traffic environment of a geographical location. Accordingly, abnormal traffic events in the geographical location are detected by determining anomalous object trajectories in the traffic activity.

As used herein, "traffic environment" indicates vehicle traffic and pedestrian traffic for a geographical location in which the traffic flow is to be managed. Accordingly, the traffic environment includes co-ordinates of the geographical location and data associated with weather, air quality, time, day, scheduled events and unscheduled events for the geographical location. The term "geographical location" includes multiple intersections and therefore, the traffic environment also includes information associated with each intersection, such as lane closure or road maintenance.

Further, "intersection" means a traffic intersection point that has either manned or unmanned traffic signal-posts that is used to manage traffic flow at the intersection. Each intersection also includes one or more lanes, whose traffic flow is managed by the traffic sign-posts.

According to the present invention, a computer implemented method of detecting abnormal traffic events in a geographical location according to appended claim 1 is provided.

The method includes determining traffic objects in real time based on a traffic environment in the geographical location. The traffic objects in the traffic environment are determined after the traffic environment is captured in real-time. As used herein "traffic objects" include vehicle type, vehicle occupancy and pedestrian type. For example, the traffic objects includes and is not limited to a car, bike, scooter, three-wheeler, bus, public transport vehicle, ambulance, vehicle for physically challenged. Further, the traffic objects include type of pedestrian such as elder pedestrian, physically-handicapped pedestrian, visually impaired pedestrian, child pedestrian and animal.

According to an aspect of the present invention, the traffic objects are captured at multiple capture nodes by capture devices, such as camera, proximity sensors, air quality sensors, etc. The capture devices can be placed at the capture nodes, such as lanes, street lights, drones, traffic sign-post at the intersection, street hoarding.

According to another aspect of the present invention, a traffic image associated with the traffic environment is captured. The traffic image is processed to identify features in the traffic image through a combination of convolution layers, pooling layers and activation layers, based on a predetermined identification model.

As used herein "feature" refers to characteristic of the traffic object, such as number of wheels, size of the traffic object etc. The feature identification analysis on the traffic image is used to determine the features associated with the traffic objects in the traffic image.

Further, "predetermined identification model" refers to a training model generated using a neural network on a predetermined set of traffic objects. The predetermined identification model is updated with new types of traffic objects. Since the traffic object identification is done by first identifying features of the traffic objects. Therefore, the method is advantageous as the traffic object identification is based on the identified features and independent of vehicle position, relative vehicle proximity and pedestrian position in the traffic environment.

In an embodiment, the predetermined identification model is an un-trained model that is generated using Generative Adversarial Networks (GANs) or Deep Convolutional Generative Adversarial Networks (DCGANs). The GAN/DCGAN tries to learn joint probability of the traffic image and the traffic objects simultaneously. The GAN/DCGAN model is advantageous as the underlying structure of the traffic image is mapped even when there are no identification parameters. This is desirable when a new vehicle type is captured at the intersection.

In another embodiment, the method includes passing the traffic image through a plurality of layers of a neural network, wherein the plurality of layer comprises convolution layers and pooling layers. In an embodiment, the traffic image is represented as a 3-dimensional array of pixels having intensities for each parameter such as colour, height, width. The 3-dimensional array is transformed through convolution layers and pooling layers using a max-function. The max-function is used to aggregate a maximum value for a spatial region across the convolution layers.

The method includes determining a traffic activity by tracking the traffic objects in the geographical location, wherein the traffic activity comprises plurality of object trajectories including location, position, and object boundaries associated with the traffic objects in real time. As used herein "traffic activity" refers to traffic object trajectories of the traffic objects such as, location, position, and boundaries associated with the traffic objects in real time.

The determination of the traffic activity is performed by determining traffic object trajectories. Accordingly, an aspect of the present invention includes determination of the object trajectories by detecting object co-ordinates associated with the traffic objects in the traffic image. The method includes determining object boundaries from the object co-ordinates. Further, determining the object trajectories and the traffic activity by tracking the traffic objects in the geographical location based on the object boundaries.

According to another aspect of the present invention, the traffic activity is determined by maintaining a tracking list. The traffic objects and traffic object co-ordinates associated with the traffic objects are detected in traffic images. The traffic object co-ordinates are interpolated and the traffic objects are tracked at predetermined intervals. Further, a tracking list with the traffic objects and the object trajectories is updated.

According to yet another aspect of the present invention, a pixel label for pixels in the traffic image is generated by labelling the pixels in terms of the traffic objects. For example, the pixel can be labelled as a car bonnet or a wheel of a two-wheeler. The object boundaries are determined the traffic object boundaries based on one of the interpolated traffic object co-ordinates and the pixel label. A tracking list with anomalous traffic objects and anomalous traffic object trajectories is maintained.

The method further includes detecting abnormal traffic events in the geographical location by determining anomalous object trajectories in the traffic activity. Accordingly, the method includes identifying anomalous traffic object and anomalous object trajectories in real time. As used herein "anomalous object" or "anomalous traffic objects" refer to the traffic objects that are probable of causing an abnormal traffic event. The term "abnormal traffic event" refers to an event that is not normal to the traffic environment as per traffic regulations and historical traffic environment. For example, abnormal traffic event includes an accident or a violation. As used herein, the "anomalous traffic object" trajectories are detected based on historic co-ordinates and current co-ordinates of the anomalous traffic objects.

In an embodiment, the anomalous object trajectories are detected in a similar manner as that of the object trajectories, i.e. based on interaction between boundaries of the pixel labels and interaction between boundaries of object bounding boxes for the traffic objects.

The anomalous traffic objects are determined by analyzing non-anomalous object trajectories from historical traffic environment. Further, a reconstruction error of object trajectories in the traffic environment is determined. In an embodiment, an auto-encoder network is trained on non-accident trajectories. During operation, the auto-encoder network is used for anomaly detection by observing the reconstruction error. As used herein "auto-encoder network" refers to a neural network used to learn a representation of data in an unsupervised manner. The auto-encoder network consists of an input layer, encoder network, decoder network and an output layer. The auto-encoder network is trained with back-propagation to minimize the reconstruction error, which is the difference between output (i.e. real time object trajectories) and input (i.e. non-anomalous object trajectories). The re-construction error is used to detect the anomalous object trajectories in real-time.

When the reconstruction error in the object trajectories exceeds a predefined threshold, then the anomalous object trajectory is identified and thereby anomalous traffic object is determined. The predefined threshold is learnt autonomously from the historical traffic environment using reward based optimization model such as reinforcement learning models. As used herein "reinforcement learning" refers to a machine learning technique wherein the algorithm takes actions in an environment so as to maximize accurate detection of anomalous object trajectories

According to an aspect of the present invention, the abnormal traffic event is analyzed to determine type of event. The abnormal traffic event can be classified as a traffic violation, traffic accident and/or both.

According to another aspect of the present invention, the abnormal traffic event is analyzed to determine casualty and severity of casualty based on a pre-trained severity model. The severity of the casualty is determined by determining number of the event traffic objects, the type of traffic objects etc. Accordingly, the pre-trained severity model is based on number of event objects, event trajectories associated with the event objects, and type of the event objects. As used herein the "event traffic objects" comprise of traffic objects associated with the abnormal traffic event including the anomalous traffic objects. Further, the term the "event trajectories" includes historical traffic object trajectories of the event traffic objects.

Based on the casualty and the severity of the casualty, the computing device initiates communication with mitigation agencies. As used herein "mitigation agency" refers to a private or government agency that is capable of reducing the impact caused by the abnormal traffic event. For example, traffic police will be the mitigation agency for a traffic violation while a hospital and the traffic police will be the mitigation agency in case of an accident.

According to the present invention also disclosed is a computing device for detecting abnormal traffic events in a geographical location according to appended claim 10.

The computing device includes one or more processors, a memory coupled to the processors, a communication unit and a database. The memory is configured to store computer program instructions defined by modules, for example, traffic density estimator, traffic prediction module, profile determination module, etc. Each processor is configured to execute the instructions in the memory. The memory may be volatile memory such as random access memory (RAM), static RAM (SRAM), dynamic RAM (DRAM) or any other memory accessible by the processor. The memory may operate as a routing table, register, virtual memory and/or swap space for the processor. Further, the storage module may represent any known or later developed non-volatile storage device such as, but not limited to, a hard drive, a solid-state drive (SSD), flash ROM (read-only memory) or an optical drive.

In an embodiment, the computing device includes an edge device and a capturing means communicatively coupled to the edge device. The edge device is a compact computing device that has resource constraints in terms of computing power.

The computing device includes a processor, a memory, a communication unit, display and a cooling fan. The memory may include 2 Giga byte Random Access Memory (RAM) Package on Package (PoP) stacked and Flash Storage.

The memory of the computing device is provided with modules stored in the form of computer readable instructions. The processor is configured to execute the defined computer program instructions in the modules. Further, the processor is configured to execute the instructions in the memory simultaneously.

The operation of the computing device in the system is explained as under. The camera relays real-time data of the traffic environment at the intersection. The traffic environment is processed by the traffic object identification module to determine traffic objects in real time based on a traffic environment in the geographical location.

The traffic object identification module comprises a feature identification module. The a feature identification module identifies features in a traffic image of the traffic environment through a combination of convolution layers, pooling layers and activation layers, based on a predetermined identification model.

The predetermined identification model is a training model generated by the traffic model generator using a neural network on a predetermined set of traffic objects. The feature identification module analyzes the traffic image to determine the features associated with the traffic objects in the traffic image. The predetermined identification model is updated with new types of traffic objects. Since the traffic object identification is done by first identifying features of the traffic objects, the traffic object identification module capable of determining traffic objects independent of vehicle position, relative vehicle proximity and pedestrian position in the traffic environment based on the identified features.

Thereafter, a traffic tracking module determines a traffic activity by tracking the traffic objects in the geographical location. The traffic tracking module comprises a traffic object module, an interpolation module, a segmentation module, a traffic object boundary module and a tracking list module. The traffic object module detects traffic object co-ordinates associated with the traffic objects in traffic images of the traffic environment. The interpolation module interpolates the traffic object co-ordinates and tracks the traffic objects at predetermined intervals. The segmentation module generates a pixel label for pixels in a traffic image associated with the traffic environment. The pixel label is generated by labelling the pixels in terms of the traffic objects. For example, the segmentation module labels the pixel as a car bonnet or a wheel of a two-wheeler. The traffic object boundary module capable of determining the traffic object boundaries based on one of the interpolated traffic object co-ordinates and the pixel label. A tracking list module capable of updating a tracking list with the anomalous traffic objects and the anomalous traffic object trajectories, wherein the tracking list includes the traffic activity of the traffic objects in the geographical location.

After the traffic objects are tracked by the traffic tracking module, the traffic event module detects abnormal traffic events in a geographical location by determining at least one anomalous traffic object trajectories from the traffic activity. The traffic tracking module includes an anomalous activity detection module capable of identifying one or more anomalous traffic objects in real-time. As used herein "anomalous traffic objects" potentially cause the abnormal traffic event. The anomalous traffic objects are detected by determining one or more anomalous traffic object trajectories associated with the anomalous traffic objects. As used herein, the anomalous traffic object trajectories are detected based on historic co-ordinates and current co-ordinates of the anomalous traffic objects. Accordingly, the anomalous activity detection module detects abnormal traffic events in a geographical location based on the anomalous traffic object trajectories.

The traffic event module further includes a unique identification module to detect unique identification of the anomalous traffic objects across one or more capture nodes. As used herein "unique identification" of the anomalous traffic objects refer to features of the anomalous traffic object that makes the traffic object unique. For example, a number plate of a vehicle can be used as the unique identification of the vehicle. In an embodiment, the unique identification determined by matching one or more identifying features associated with the anomalous traffic objects across the capture nodes.

The traffic event module also includes an event classification module and a casualty estimation module. The event classification module determines a type of event by classifying the abnormal traffic event as one of a traffic violation, a traffic accident and both. Further, the casualty estimation module determines a severity of casualty of the abnormal traffic event based on a pre-trained severity estimation model. The pre-trained severity estimation model is based on number of event traffic objects, event trajectories associated with the event traffic objects, and type of the event traffic objects. Accordingly, the computing device detects the abnormal traffic events and the event traffic objects in the geographical location. After detecting the abnormal traffic events and the event traffic objects the computing device communicates the abnormal traffic events to at least one mitigation agency for mitigating effect of the abnormal traffic events via the communication unit.

The present invention also provides a system for detecting abnormal traffic events in a geographical location according to appended claim 15.

The system includes a server, a network, a database, the camera and a computing device. The server is communicatively coupled to the database. The database is, for example, a structured query language (SQL) data store or a not only SQL (NoSQL) data store.

In an embodiment, the database may be a location on a file system directly accessible by the server. In another embodiment, the server and the database may be configured as cloud based database implemented in a cloud computing environment, where computing resources are delivered as a service over the network.

As used herein, "cloud computing environment" refers to a processing environment comprising configurable computing physical and logical resources, for example, networks, servers, storage, applications, services, etc., and data distributed over the network, for example, the internet. The cloud computing environment provides on-demand network access to a shared pool of the configurable computing physical and logical resources. The network is, for example, a wired network, a wireless network, a communication network, or a network formed from any combination of these networks.

The server includes a computing device as indicated herein before. The computing device is communicatively coupled to the network. The memory is configured to store computer program instructions defined by modules, for example, traffic training model and traffic model generator.

The above-mentioned and other features of the invention will now be addressed with reference to the accompanying drawings of the present invention. The illustrated embodiments are intended to illustrate, but not limit the invention.

### Brief Description of the Drawings

The present invention is further described hereinafter with reference to illustrated embodiments shown in the accompanying drawings, in which:
FIG 1 is a block diagram of a system for detecting abnormal traffic events in a geographical location;
FIG 2 is a block diagram of an edge device for detecting abnormal traffic events in a geographical location;
FIG 3 illustrates a method of operation of the edge device in FIG. 2;
FIGs 4A, 4B and 4C illustrate tracking of traffic objects including anomalous traffic objects by the edge device of FIG. 2;
FIG 5 illustrates estimation of casualty and severity of casualty by an edge device;
FIG 6 illustrates determination of traffic violation by an edge device; and
FIG 7 illustrates a method of managing traffic flow in a geographical location.

Various embodiments are described with reference to the drawings, wherein like reference numerals are used to refer to like elements throughout. Further, numerous specific details are set forth in order to provide thorough understanding of one or more embodiments of the present invention. These examples must not be considered to limit the application of the invention to configurations disclosed in the figures. It may be evident that such embodiments may be practiced without these specific details.

### Detailed Description

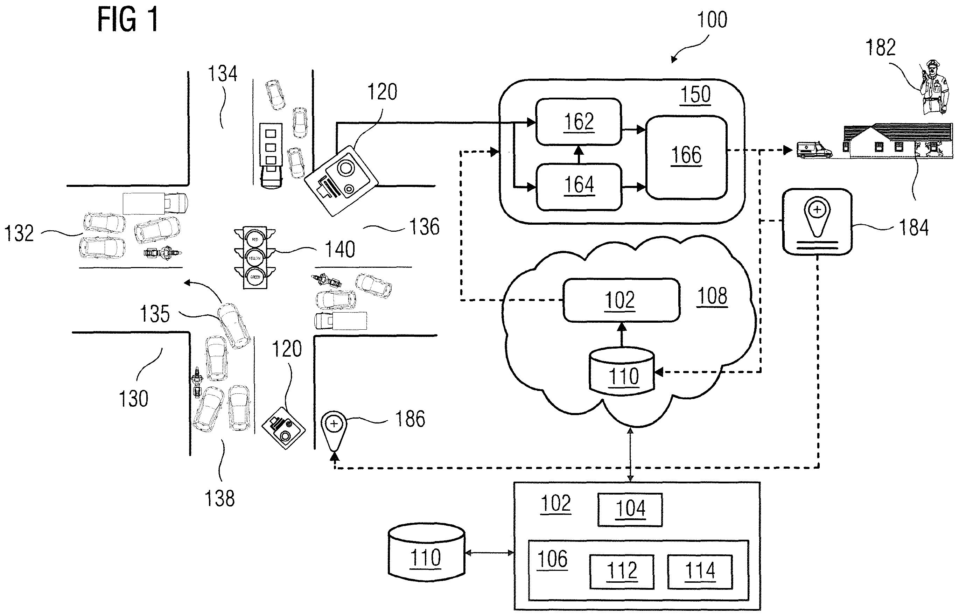

FIG 1 is a block diagram of a system 100 for detecting abnormal traffic events in a geographical location. The geographical location refers to an area or an intersection 130. As shown in FIG. 1, traffic at the intersection 130 includes vehicular traffic and pedestrian traffic. The intersection 130 is connected to lanes 132, 134, 136 and 138. The intersection 130 includes a traffic signpost 140, to indicate whether the traffic at the lanes 132, 134, 136 and 138 should stop (red), proceed cautiously (yellow) or proceed (green). Further, the intersection 130 is provided with a camera 120, to capture traffic environment associated with the intersection 130.

The system 100 includes a server 102, a network 108, a database 110, the camera 120 and a computing device 150. As shown in FIG 1, the server 102 is communicatively coupled to the database 110. The database 110 is, for example, a structured query language (SQL) data store or a not only SQL (NoSQL) data store. In an embodiment, the database 110 may be a location on a file system directly accessible by the server 102. In another embodiment, the server 102 and the database 110 may be configured as cloud based database implemented in a cloud computing environment, where computing resources are delivered as a service over the network 108.

As used herein, "cloud computing environment" refers to a processing environment comprising configurable computing physical and logical resources, for example, networks, servers, storage, applications, services, etc., and data distributed over the network 108, for example, the internet. The cloud computing environment provides on-demand network access to a shared pool of the configurable computing physical and logical resources. The network 108 is, for example, a wired network, a wireless network, a communication network, or a network formed from any combination of these networks.

The server 102 includes a controller 104 and a memory 106. The server 102 is communicatively coupled to the network 108. The memory 106 is configured to store computer program instructions defined by modules, for example, traffic training model 112 and traffic model generator 114.

Further, FIG 1 shows that the computing device 150 includes an anomalous activity detection module 162, an event classification module 164 and a casualty estimation module 166.

The anomalous activity detection module 162 is capable of identifying one or more anomalous traffic objects in real-time. As used herein, "anomalous activity" includes activity that may lead to accident, traffic violation or both. The anomalous traffic objects are traffic objects that potentially cause the abnormal traffic event. For example, a vehicle 135 jumping a traffic signal indicated on the traffic signpost 140 is an anomalous traffic object.

The anomalous activity detection module 162 also detects one or more anomalous traffic object trajectories associated with the anomalous traffic objects. The anomalous traffic object trajectories are detected based on historic co-ordinates and current co-ordinates of the anomalous traffic objects. Considering the above example, speed, wheel angle and position of the vehicle 135 over a predetermined time interval is referred to as the anomalous traffic object trajectory. Such anomalous traffic object trajectories are determined for all anomalous traffic objects in the geographical location. Once the anomalous activity is detected, the event classification module 164 classifies the abnormal traffic event as a traffic violation or an accident or both.

The casualty estimation module 166 determines a casualty and severity of the casualty of the abnormal traffic event. The casualty is determined based on event trajectories associated with event traffic objects and a pre-trained severity model. As used herein the "event traffic objects" comprise of traffic objects associated with the abnormal traffic event including the anomalous traffic objects (for example, vehicle 135). Further, the term the "event trajectories" includes historical traffic object trajectories of the event traffic objects. The severity of the casualty is also determined by estimating the number of event traffic objects, the type of traffic objects etc.

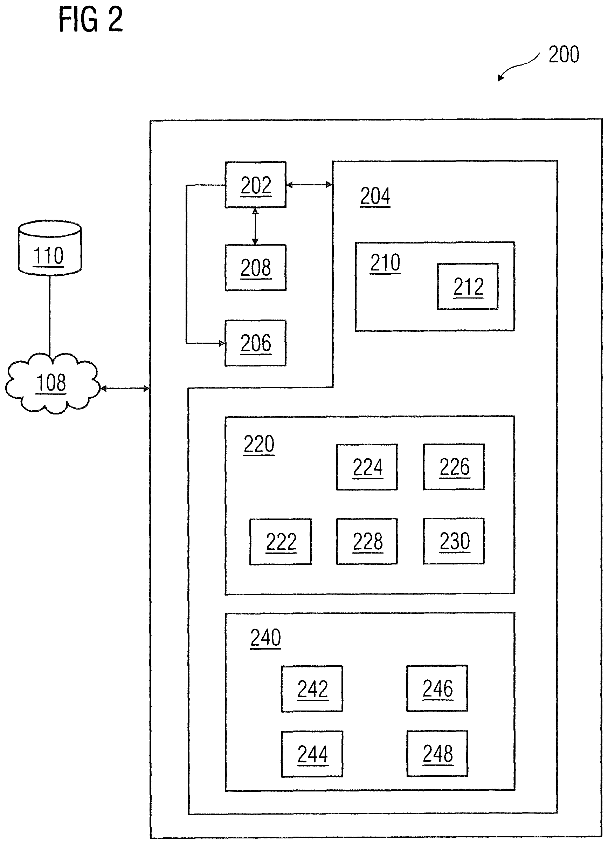

Based on the casualty and the severity of the casualty, the computing device initiates communication with mitigation agencies 182, 184 and 186. As used herein "mitigation agency" refers to a private or government agency that is capable of reducing the impact caused by the abnormal traffic event. For example, traffic police 182 will be the mitigation agency for a traffic violation while a hospital 184, 186 and the traffic police 182 will be the mitigation agency in case of an accident. The computing device 150 includes other components such as processor, memory and communication unit, as described in detail in FIG 2.

FIG 2 is a block diagram of an edge device 200 detecting abnormal traffic events in a geographical location. The edge device 200 can be used in place of the computing device 150. The edge device 200 has a small form factor that is capable of connecting with the network 108. The edge device 200 includes a processor 202, a memory 204, a communication unit 208, display 206 and a cooling fan (not shown in the figure). The memory 204 may include 2 Giga byte Random Access Memory (RAM) Package on Package (PoP) stacked and Flash Storage.

The memory 204 of the edge device 200 is provided with modules stored in the form of computer readable instructions, for example, 210, 212, 220, 230, 240 etc. The processor 202 is configured to execute the defined computer program instructions in the modules. Further, the processor 202 is configured to execute the instructions in the memory 204 simultaneously.

The operation of the edge device 200 in the system 100 is explained as under. The camera 120 relays real-time data of the traffic environment at the intersection 130. The traffic environment is processed by the traffic object identification module 210 to determine traffic objects in real time based on a traffic environment in the geographical location.

The traffic object identification module 210 comprises a feature identification module 212. The feature identification module 212 identifies features in a traffic image of the traffic environment through a combination of convolutional layers, pooling layers and activation layers, based on a predetermined identification model. As used herein "feature" refers to characteristic of the traffic object, such as number of wheels, size of the traffic object etc.

The predetermined identification model is a training model generated by the traffic model generator 114 using a neural network on a predetermined set of traffic objects. The feature identification module 212 analyzes the traffic image to determine the features associated with the traffic objects in the traffic image. The predetermined identification model is updated with new types of traffic objects. Since the traffic object identification is done by first identifying features of the traffic objects, the traffic object identification module capable of determining traffic objects independent of vehicle position, relative vehicle proximity and pedestrian position in the traffic environment based on the identified features.

Thereafter, a traffic tracking module 220 determines a traffic activity by tracking the traffic objects in the geographical location. As used herein "traffic activity" refers to traffic object trajectories of the traffic objects such as, location, position, and boundaries associated with the traffic objects in real time.

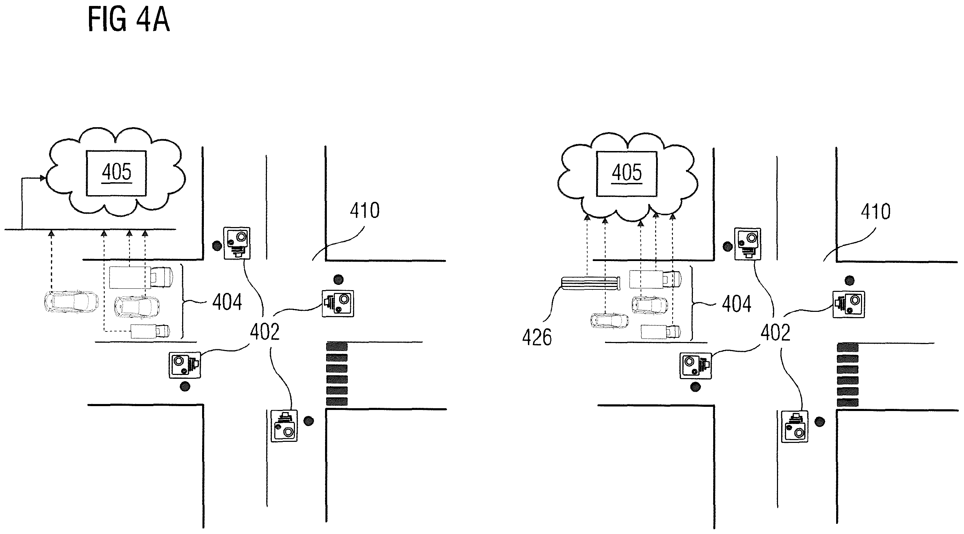

The traffic tracking module 220 comprises of a traffic object module 222, an interpolation module 224, a segmentation module 226, a traffic object boundary module 228 and a tracking list module 230. The traffic object module 222 detects traffic object co-ordinates associated with the traffic objects in traffic images of the traffic environment. The interpolation module 224 interpolates the traffic object co-ordinates and tracks the traffic objects at predetermined intervals. The segmentation module 226 generates a pixel label for pixels in a traffic image associated with the traffic environment. The pixel label is generated by labelling the pixels in terms of the traffic objects. For example, the segmentation module 226 labels the pixel as a car bonnet or a wheel of a two-wheeler. The traffic object boundary module 228 capable of determining the traffic object boundaries based on one of the interpolated traffic object co-ordinates and the pixel label. Tracking list module is capable of updating a tracking list with the anomalous traffic objects and the anomalous traffic object trajectories, wherein the tracking list includes the traffic activity of the traffic objects in the geographical location. The process of determining the traffic objects by the traffic tracking module 220 is explained further in FIGs 4A-4C.

After the traffic objects are tracked by the traffic tracking module 220, the traffic event module 240 detects abnormal traffic events in a geographical location by determining at least one anomalous traffic object trajectories from the traffic activity. The traffic tracking module 220 includes an anomalous activity detection module 242 capable of identifying one or more anomalous traffic objects in real-time. As used herein "anomalous traffic objects" potentially cause the abnormal traffic event. The anomalous traffic objects are detected by determining one or more anomalous traffic object trajectories associated with the anomalous traffic objects. As used herein, the anomalous traffic object trajectories are detected based on historic co-ordinates and current co-ordinates of the anomalous traffic objects. Accordingly, the anomalous activity detection module 242 detects abnormal traffic events in a geographical location based on the anomalous traffic object trajectories.

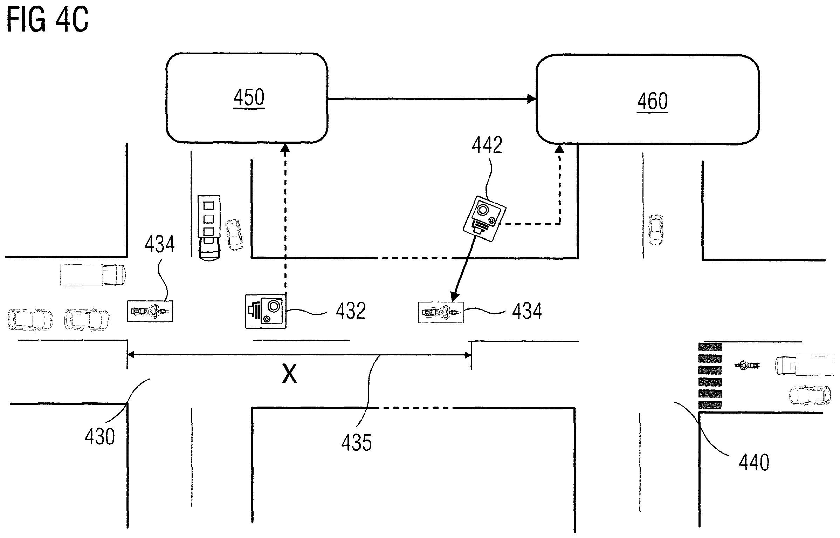

The traffic event module 240 further includes a unique identification module 244 to detect unique identification of the anomalous traffic objects across one or more capture nodes. As used herein "unique identification" of the anomalous traffic objects refer to features of the anomalous traffic object that makes the traffic object unique. For example, a number plate of a vehicle can be used as the unique identification of the vehicle. In an embodiment, the unique identification determined by matching one or more identifying features associated with the anomalous traffic objects across the capture nodes. The unique identification is also used for tracking of the traffic objects by the traffic tracking module 220 as indicated in FIG 4C.

The traffic event module 240 also includes an event classification module 246 and a casualty estimation module 248. The event classification module 246 determines a type of event by classifying the abnormal traffic event as one of a traffic violation, a traffic accident and both. Further, the casualty estimation module 248 determines a severity of casualty of the abnormal traffic event based on a pre-trained severity estimation model. The pre-trained severity estimation model is based on number of event traffic objects, event trajectories associated with the event traffic objects, and the type of event traffic objects. As used herein "event traffic objects" refer to traffic objects associated with the abnormal traffic event. Further, the "event trajectories" refer to historical traffic object trajectories of the event traffic objects. Therefore, the event traffic objects include the anomalous traffic objects and affected traffic objects that have been impacted by the abnormal traffic event. Accordingly, the edge device 200 detects the abnormal traffic events and the event traffic objects in the geographical location. After detecting the abnormal traffic events and the event traffic objects, the edge device 200 communicates the abnormal traffic events to at least one mitigation agency for mitigating effect of the abnormal traffic events via the communication unit 208.

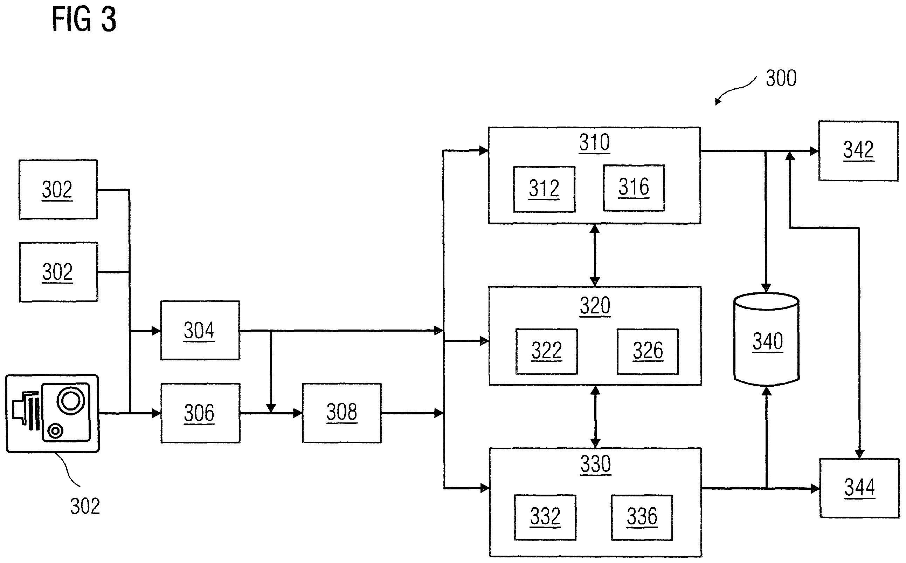

FIG 3 illustrates a method of operation of the edge device in FIG. 2. As shown in the figure, the method begins with capturing the traffic environment in the geographical location indicated by capture devices 302 at multiple capture nodes. The capture devices 302 can be placed on street lights, drones, traffic sign-post at the intersection, street hoarding. In an embodiment, capture devices 302 include sensors placed on lanes such as 132 in FIG 1. The sensors include air quality sensor, capable of determining the quality of air discharged from exhaust of the vehicles.

By distributing the capture devices 302 along lanes of the intersection, the traffic environment is captured for all parameters, evenly across the lanes of the intersection. This enables precise determination of the traffic environment at the intersection. As used herein, the capture devices can be manned device or unmanned device provided with an image sensor, a motion sensor, a Global Positioning System (GPS) device. For example, the capture devices can be cameras located on traffic-sign posts, street lights, drones, etc. In another example, the capture devices can be mobile computing devices with GPS sensors that are able to relay details of wait-time time at a position due to heavy traffic congestion.

According to yet another embodiment, the method includes capturing media data comprising social media corresponding to the intersection. For example, the media and social media sites provide real-time information of traffic at various geographical locations. A server parses through the media data to detect if there is the traffic anomaly associable to the intersection. This information is communicated from the server to a computing device located at the intersection, which selects the traffic signal profile for the intersection.

Further, the method includes generating a traffic image of the traffic environment. In an embodiment, a pixel label is generated for pixels in the traffic image. The pixel label is generated by labelling the pixels in terms of the traffic objects at step 304. By labelling the pixels the traffic objects can be tracked in step 308.

In another embodiment, features in the traffic image identified through a combination of convolutional layers, pooling layers and activation layers, based on a predetermined identification model at step 306. Based on the features identified, the traffic objects are detected independent of vehicle position, relative vehicle proximity and pedestrian position based on the identified features. Therefore, the captured traffic environment from the capture devices is processed to track all traffic objects that enter a capture location until they exit from the capture location. As used herein "capture location" refers to the area or location which is capable of being captured by the capture device. In an embodiment, steps for sensing, tracking and detection are executed on the edge device 200 connected to the capture devices 302.

At step 308, the traffic objects are tracked to determine traffic activity of the traffic objects. In step 308, multiple traffic objective tracking techniques are used to track more than one traffic object in the video. Tracking is performed by determining initial position of the traffic object in first instance of appearance in the captured traffic environment. Using the initial position and images of successive frames of the captured traffic environment, position of the same traffic object is predicted.

In an embodiment, traffic object bounding boxes for the traffic objects are defined to track the traffic objects. A traffic object bounding box of the form (x, y, width, height), where (x, y) are the coordinates of top left corner of the traffic object bounding box, is generated. Tracking is required in addition to simple traffic object detection because detecting traffic objects in every frame of video maybe computationally prohibitive. By performing detections every N frames and interpolating detected bounding boxes between these frames using tracking methods, computation is reduced. Tracking is also useful because detection can fail due to occlusion i.e. one traffic object is covered by another traffic object or changes in illumination. In these cases, tracking methods use their internal representation of the traffic object's appearance and movement (which includes speed and direction) to predict the possible future location of the tracked traffic object. Tracking also preserves identity of traffic objects. Accordingly, it is possible track a traffic object across video frames.

After the traffic objects are tracked, detection of the abnormal traffic event is performed at steps 310, 320 and 330. The steps 310, 320 and 330 can be performed in series, in parallel or in random order sequence.

At step 310, the detected abnormal traffic event is classified as an accident. Step 310 includes sub-steps 312 and 316. At step 312, the accidents are detected from the traffic activity generated by tracking the traffic objects. The details of the accident are then extracted in step 316. The details of the accident include, number of traffic objects involved, the location of the accident, the severity of the accident, the casualties involved, etc. At step 342, traffic police and medical services such as nearby hospitals and ambulances are intimated regarding the details of the accident.

Step 320 is also performed to recognize the traffic objects involved in the accident. Step 320 includes of sub-steps 322 and 326. At 322, the details of the traffic objects are extracted. For example, type of traffic objects such as vehicle or pedestrian, type of vehicle, passengers in the vehicle, type of passengers in the vehicle, etc. At step 326, unique identification of the traffic objects is determined. For example, unique identification includes and is not limited to registration number of a vehicle (the traffic object), characteristic colour and shape of the traffic object etc. Accordingly at step 326, automatic one-time calibration to detect features of the intersection or road segment is performed. For example, Lane markings, Pedestrian crossing zones, Allowed directions and regions of vehicle movement, Traffic sign boards, etc.

Step 330 relates to violation detection and includes sub-steps 332 and 336. At step 332, violation in the traffic environment is detected. As used herein, violation refers to violation of a traffic rule. The violation can be done by a traffic object in motion or stationary. For example, moving violations include speeding, running a stop sign or red light, Pedestrian crossing violation / overstepping, and drunk driving. The non-moving violation includes incorrect parking or faulty equipment.

The violations are detected by determining the traffic object trajectories are recorded continuously (at step 340) and analyzed by learning models such as Long Short Term Memory (LSTM) or other time-series models such as a Hidden Markov Model (HMM). These models output a probability between 0 and 1 of the traffic object trajectory input. In an embodiment, the traffic object trajectories with a high probability of violation are subject to further post-processing by performing step 320.

In an embodiment, rule-based models are applied along with the learning models. This is advantageous when different kinds of traffic violations show very little similarity and it may not be possible for the learning model to capture a violation pattern from a small set of trajectories.

At step 336, a traffic ticket is generated for the violation. At step 344, in case of the violation leading to an accident and casualty, traffic police and nearest hospital is intimated regarding the violation. Details regarding the abnormal traffic environment i.e. accident and violation is recorded in a database at step 340. The step 340 is performed continuously at each sub-step of 310, 320 and 330.

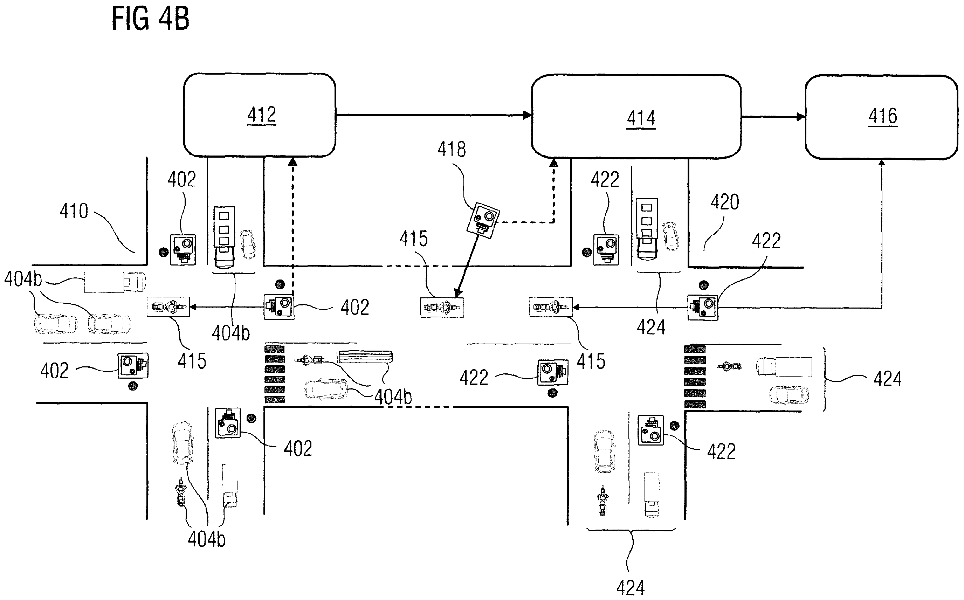

FIGs 4A, 4B and 4C illustrate tracking of traffic objects including anomalous traffic objects by the edge device of FIG. 2.

FIG 4A relates to tracking of traffic objects 404, 426 (i.e. vehicles) using a cameras 402 installed at an intersection 410. All traffic objects 404, 426 entering the intersection are tracked using the cameras 402 and by maintaining a list labelled 'Tracker List' 405. A traffic object 426 is added to the tracker list 405 when it first appears in the intersection 410. The details saved in the Tracker List 405 include trajectory with corresponding time data.

FIG 4B relates to tracking of a traffic object 415 across intersections 410 and 420. As shown in FIG 4B, there are 2 intersections 410 and 420 with traffic objects 404b, 415 at intersection 410 and traffic objects 424 and 415 at intersection 420. In the figure, the intersection 410 and intersection 420 are consecutive to each other. In another embodiment, the intersections 410 and 420 maybe spread across several intermediate intersections.

Further, at each intersection 410, 420 there are capture devices 402 and 422, respectively. In addition to capture devices 402 and 422 there are capture devices 418 between intersections 410 and 420. Further, FIG 4B illustrates the steps 412, 414 and 416 performed at intersections 410 and 420 to track the traffic object 415.

At step 412, violation of jumping a traffic signal is detected at the intersection 410. However, unique identification of the traffic object 415, such as vehicle registration number, may not be detectable at step 412. Accordingly, the traffic environment image associated with the vehicle 415 is transmitted to the intersection 420 such that the unique identification of the vehicle 415 can be captured.

At step 414, the traffic environment is captured at intersection 420. Further, features of the vehicle 415 are identified from the traffic environment image from the intersection 410.

The features of the vehicle 415 are compared with the traffic environment captured at the intersection 420. When the features match the unique identification of the vehicle 415 is captured. At step 416, the unique identification of the vehicle 415 is mapped to the violation detected and a traffic ticket is generated.

Fig 4C relates to tracking and determining over speeding of a traffic object 434 across intersections 430 and 440. The traffic object 434 is tracked by cameras 432 and 442. At step 450, the speed of the traffic object 434 is estimated and the registration number is identified. The cameras 432 and 442 track the traffic object 434 with a timestamp. At step 460, the registration number, the timestamp and the distance 435 between traversed are used to determine whether the traffic object 434 is over speeding.

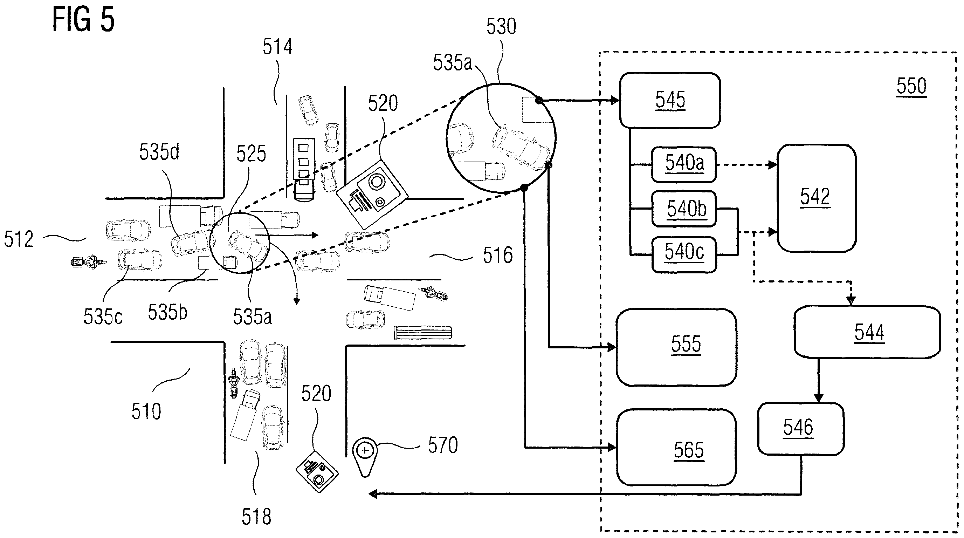

FIG 5 illustrates estimation of casualty and severity of casualty by an edge device 550 for traffic environment at an intersection 510. The intersection 510 includes lanes 512, 514, 516 and 518. The traffic environment includes multiple traffic objects including the traffic objects involved in the abnormal traffic event 525. In FIG 5, anomalous traffic object is vehicle 535a and event traffic objects 535b-535d. The traffic environment including the abnormal traffic event 525 is captured by a camera 520 as a traffic image 530.

The edge device 550 receives the traffic image 530 and determines the traffic objects in the traffic environment. Accordingly, the edge device 550 determines the traffic object specific information such as location, object trajectories.

The edge device 550 performs steps 545-565 to estimate the severity of casualty of the abnormal traffic event 525. The steps 545-565 can be performed parallel or sequentially in any order. The edge device 550 performs the steps using neural networks. In an embodiment, the neural networks include Recurrent Neural Networks (RNNs). The RNNs are used to capture temporal and spatial relations in the traffic environment. The RNNs have memory of historical traffic environment. In an embodiment, a type of RNN such as Long Short Term Memory (LSTM) is used. An LSTM has architecture similar to an RNN, with weight matrices that allow the LSTM network to selectively remember and forget parts of the traffic environment received over time.

Since, RNNs operate only on sequences such as time series, text and flattened image of the traffic environment. The edge device 550 also uses Long term recurrent convolutional networks on the traffic environment. This is advantageous as the traffic environment is captured in both spatial and temporal manner, such as videos. An LRCN consists of several convolutional and pooling layers, followed by RNN network. The convolutional layers map a traffic image to a feature vector. Further, the RNN network take as input multiple features from the traffic image to determine the abnormal traffic event 525.

The described methods are used to detect and localize the abnormal traffic event 525 in the traffic environment. Once the abnormal traffic event 525 is detected, information about the abnormal traffic event is determined at step 555. The information includes type of event objects 535a-535b involved - includes the number and type of vehicles, such as sedan, SUV, truck, motorcycle.

Further, severity of the abnormal traffic event 525 is determined at step 545. According, at step 545, object trajectories of the event objects 535a-535d involved is determined. Additionally, the event object 535a is identified as the anomalous traffic object 535a. Based on the type of event objects 535b-535d and the anomalous object 535a the severity of the abnormal traffic event 525 is determined. For example, the injuries and casualties, the number of humans involved in the abnormal traffic event 525 is calculated at step 565.

Based on the estimated severity of the injuries and casualties the abnormal traffic event 525 is categorized as a minor incident 540a, a major incident 540b and a critical incident 540c. When the minor incident 540a is determined then the police control room is intimated at step 542. In case of major and critical incidents, apart from intimating the police control room, local hospitals are identified intimated at steps 544 and 546.

In addition, the edge device 550 is capable of estimating the required emergency services, such as ambulance 570 based on the previously detected abnormal traffic events. Further, the kind of emergency services required such as fire engine, police and ambulance are also estimated at step 545.

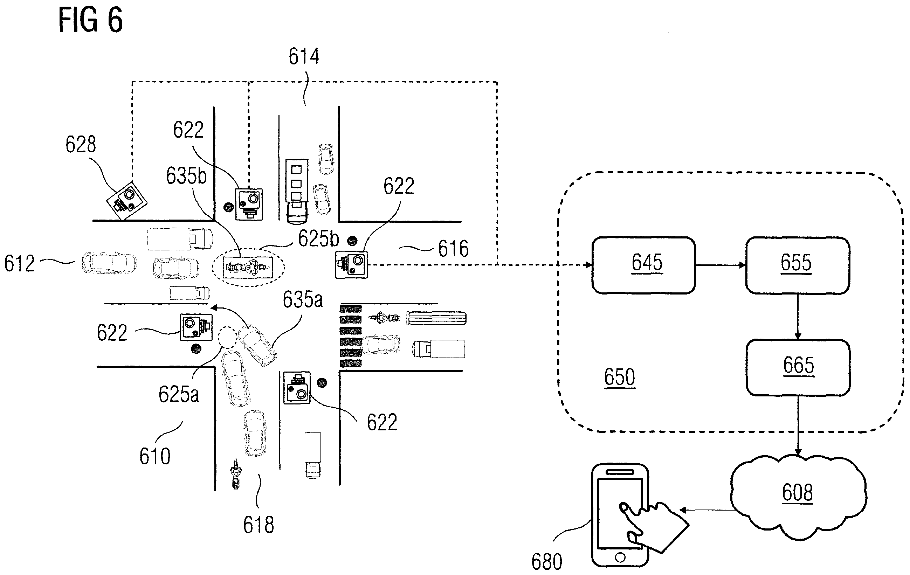

FIG 6 illustrates determination of traffic violation by an edge device 650 for traffic environment at an intersection 610. The intersection 610 includes lanes 612, 614, 616 and 618. The traffic environment includes multiple traffic objects including the traffic objects involved in the abnormal traffic events 625a and 625b. The traffic environment including the abnormal traffic events 625a and 625b are captured by capture devices 622 and 628 as a traffic image.

In FIG 6, anomalous traffic objects include vehicles 635a and 635b, which is determined by the edge device 650. The edge device 650 receives the captured traffic environment and performs the steps 645-665 to identify the vehicles 635a and 635b.

At step 645, the violation is detected and classified. For example, the violation types include and are not limited to red light jumping, lane indiscipline, pedestrian crossing violation/overstepping, riding without helmet, illegal parking, taking U-turn when prohibited, driving against one-way traffic, driving on footpath/sidewalk, standing/parking in prohibited areas and over-speeding. In the present embodiment, object trajectories of vehicles 635a and 635b are detected as violations. Violation of the vehicle 635a is classified as lane indiscipline and violation of the vehicle 635b is classified as red light jumping. At step 655, the registration numbers for vehicles 635a and 635b are detected. At step 665 the details of the vehicles 635a and 635b are sent to a handheld device 680 via a cloud infrastructure 608. The handheld device 680 is operable by police personnel proximate to the violation.

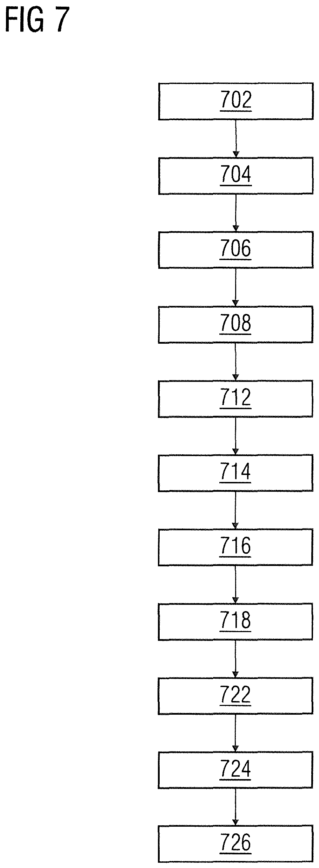

FIG 7 illustrates a method of managing traffic flow in a geographical location. The method begins at step 702 by capturing a traffic environment in real-time at plurality of capture nodes in the geographical location. The traffic environment comprises vehicular traffic and pedestrian traffic.

At step 704, traffic objects are determined in real time based on a traffic environment in the geographical location. The traffic objects include road, road type, road condition, vehicle type, vehicle occupancy and pedestrian type. In an embodiment, the traffic objects are determined by capturing a traffic image associated with the traffic environment. Identifying features in the traffic image through a combination of convolutional layers, pooling layers and activation layers, based on a predetermined identification model. Recognizing the traffic objects independent of vehicle position, relative vehicle proximity and pedestrian position based on the identified features.

At step 706, object co-ordinates are detected. The object co-ordinates are associated with the traffic objects in traffic images of the traffic environment. The object boundaries are determined from the object co-ordinates. Further, at step 708 the predetermined identification model is trained with object bounding boxes associated with the object co-ordinates, width and height of the traffic objects in the traffic image.

At step 712, traffic activity is determined by tracking the traffic objects in the geographical location. The traffic activity comprises plurality of object trajectories including location, position, and boundaries associated with the traffic objects in real time based on the object boundaries.

In an embodiment, the traffic activity is determined by tracking traffic objects via the object boundaries. Accordingly, at step 714 the object co-ordinates interpolated to track the traffic objects at predetermined intervals. Further, a pixel label is generated for pixels in a traffic image associated with the traffic environment. The pixel label is generated by labelling the pixels in terms of the traffic objects. The object boundaries are determined based on one of the interpolated object co-ordinates and the pixel label.

At step 716, anomalous traffic objects are identified in real-time. The anomalous traffic objects potentially cause the abnormal traffic event. In addition, anomalous object trajectories are detected. The anomalous object trajectories are detected based on historic co-ordinates and current co-ordinates of the anomalous traffic objects.

In an embodiment, the anomalous object trajectories are detected in a similar manner as that of the object trajectories, i.e. based on interaction between boundaries of the pixel labels and interaction between boundaries of object bounding boxes for the traffic objects. In another embodiment, the anomalous traffic objects are determined by analyzing non-anomalous object trajectories from historical traffic environment. Further, a reconstruction error of object trajectories in the traffic environment is determined. In an embodiment, an auto-encoder network is trained on non-accident trajectories. During operation, the auto-encoder network is used for anomaly detection by observing the reconstruction error. As used herein "auto-encoder network" refers to a neural network used to learn a representation of data in an unsupervised manner. The auto-encoder network consists of an input layer, encoder network, decoder network and an output layer. The auto-encoder network is trained with back-propagation to minimize the reconstruction error, which is the difference between output (i.e. real time object trajectories) and input (i.e. non-anomalous object trajectories). The re-construction error is used to detect the anomalous object trajectories in real-time.

When the reconstruction error in the object trajectories exceeds a predefined threshold, then the anomalous object trajectory is identified and thereby anomalous traffic object is determined. The predefined threshold is learnt autonomously from the historical traffic environment using reward based optimization model, such as reinforcement learning. The reinforcement learning algorithms that can be used include and are not limited to Neural-Fitted Q-Iteration, Deep Q-Learning, Double Deep Q-Learning, Asynchronous Advantage Actor-Critic (A3C) and model-based reinforcement learning methods such as Recurrent Control Neural Network.

The anomalous traffic objects and the anomalous object trajectories are used to determine abnormal traffic events. At step 718, abnormal traffic events are detected in the geographical location by determining one or more anomalous object trajectories. Further, at step 722 severity of casualty of the abnormal traffic event is determined based on a pre-trained severity estimation model. The pre-trained severity model is based on number of event objects, event trajectories associated with the event objects, and type of the event objects. The event objects comprise of traffic objects associated with the abnormal traffic event including the anomalous traffic objects. The event trajectories comprise historical object trajectories of the event objects.

At step 724, a type of event is determined by classifying the abnormal traffic event as a traffic violation, a traffic accident and both. Based on the severity of casualty and the type of event a mitigation agency is communicated. Accordingly, at step 726, communication with at least one mitigation agency is initiated. The mitigation agency refers to a private or government agency that is capable of reducing the impact caused by the abnormal traffic event. For example, traffic police will be the mitigation agency for a traffic violation while a hospital and the traffic police will be the mitigation agency in case of an accident.

The above disclosed method, device and system may be achieved via implementations with differing or entirely different components, beyond the specific components and/or circuitry set forth above. With regard to such other components (e.g., circuitry, computing/processing components, etc.) and/or computer-readable media associated with or embodying the present invention, for example, aspects of the invention herein may be implemented consistent with numerous general purpose or special purpose computing systems or configurations. Various exemplary computing systems, environments, and/or configurations that may be suitable for use with the disclosed subject matter may include, but are not limited to, various clock-related circuitry, such as that within personal computers, servers or server computing devices such as routing/connectivity components, hand-held or laptop devices, multiprocessor systems, microprocessor-based systems, set top boxes, smart phones, consumer electronic devices, network PCs, other existing computer platforms, distributed computing environments that include one or more of the above systems or devices, etc.

In some instances, aspects of the invention herein may be achieved via logic and/or logic instructions including program modules, executed in association with the circuitry, for example. In general, program modules may include routines, programs, objects, components, data structures, etc. that perform particular tasks or implement particular control, delay or instructions. The inventions may also be practiced in the context of distributed circuit settings where circuitry is connected via communication buses, circuitry or links. In distributed settings, control/instructions may occur from both local and remote computer storage media including memory storage devices.

The system and computing device along with their components herein may also include and/or utilize one or more type of computer readable media. Computer readable media can be any available media that is resident on, associable with, or can be accessed by such circuits and/or computing components. By way of example, and not limitation, computer readable media may comprise computer storage media and communication media. Computer storage media includes volatile and non-volatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical storage, magnetic tape, magnetic disk storage or other magnetic storage devices, or any other medium which can be used to store the desired information and can accessed by computing component. Communication media may comprise computer readable instructions, data structures, program modules or other data embodying the functionality herein. Further, communication media may include wired media such as a wired network or direct-wired connection, and wireless media such as acoustic, RF, infrared, 4G and 5G cellular networks and other wireless media. Combinations of the any of the above are also included within the scope of computer readable media.

In the present description, the terms component, module, device, etc. may refer to any type of logical or functional circuits, blocks and/or processes that may be implemented in a variety of ways. For example, the functions of various circuits and/or blocks can be combined with one another into any other number of modules. Each module may even be implemented as a software program stored on a tangible memory (e.g., random access memory, read only memory, CD-ROM memory, hard disk drive) to be read by a central processing unit to implement the functions of the invention herein. Or, the modules can comprise programming instructions transmitted to a general purpose computer or to processing/graphics hardware via a transmission carrier wave. Also, the modules can be implemented as hardware logic circuitry implementing the functions encompassed by the invention herein. Finally, the modules can be implemented using special purpose instructions (SIMD instructions), field programmable logic arrays or any mix thereof which provides the desired level performance and cost.

As disclosed herein, implementations and features consistent with the present inventions may be implemented through computer-hardware, software and/or firmware. For example, the systems and methods disclosed herein may be embodied in various forms including, for example, a data processor, such as a computer that also includes a database, digital electronic circuitry, firmware, software, or in combinations of them. Further, while some of the disclosed implementations describe components such as software, systems and methods consistent with the invention herein may be implemented with any combination of hardware, software and/or firmware. Moreover, the above-noted features and other aspects and principles of the invention herein may be implemented in various environments. Such environments and related applications may be specially constructed for performing the various processes and operations according to the present invention or they may include a general-purpose computer or computing platform selectively activated or reconfigured by code to provide the necessary functionality. The processes disclosed herein are not inherently related to any particular computer, network, architecture, environment, or other apparatus, and may be implemented by a suitable combination of hardware, software, and/or firmware. For example, various general-purpose machines may be used with programs written in accordance with teachings of the invention herein, or it may be more convenient to construct a specialized apparatus or system to perform the required methods and techniques.

Aspects of the method and system described herein, such as the logic, may be implemented as functionality programmed into any of a variety of circuitry, including programmable logic devices ("PLDs"), such as field programmable gate arrays ("FPGAs"), programmable array logic ("PAL") devices, electrically programmable logic and memory devices and standard cell-based devices, as well as application specific integrated circuits. Some other possibilities for implementing aspects include: memory devices, microcontrollers with memory (such as EEPROM), embedded microprocessors, firmware, software, etc. Furthermore, aspects may be embodied in microprocessors having software-based circuit emulation, discrete logic (sequential and combinatorial), custom devices, fuzzy (neural) logic, quantum devices, and hybrids of any of the above device types. The underlying device technologies may be provided in a variety of component types, e.g., metal-oxide semiconductor field-effect transistor ("MOSFET") technologies like complementary metal-oxide semiconductor ("CMOS"), bipolar technologies like emitter-coupled logic ("ECL"), polymer technologies (e.g., silicon-conjugated polymer and metal-conjugated polymer-metal structures), mixed analog and digital, and so on.

It should also be noted that the various logic and/or functions disclosed herein may be enabled using any number of combinations of hardware, firmware, and/or as data and/or instructions embodied in various machine-readable or computer-readable media, in terms of their behavioural, register transfer, logic component, and/or other characteristics. Computer-readable media in which such formatted data and/or instructions may be embodied include, but are not limited to, non-volatile storage media in various forms (e.g., optical, magnetic or semiconductor storage media) and carrier waves that may be used to transfer such formatted data and/or instructions through wireless, optical, or wired signalling media or any combination thereof. Examples of transfers of such formatted data and/or instructions by carrier waves include, but are not limited to, transfers (uploads, downloads, e-mail, etc.) over the Internet and/or other computer networks via one or more data transfer protocols (e.g., Hypertext Transfer Protocol (HTTP), File Transfer Protocol (FTP), Simple Mail Transfer Protocol (SMTP), and so on).

Unless the context clearly requires otherwise, throughout the description and the claims, the words "comprise," "comprising," and the like are to be construed in an inclusive sense as opposed to an exclusive or exhaustive sense; that is to say, in a sense of "including, but not limited to." Words using the singular or plural number also include the plural or singular number respectively. Additionally, the words "herein," "hereunder," "above," "below," and words of similar import refer to this application as a whole and not to any particular portions of this application.

Although certain presently preferred implementations of the present invention have been specifically described herein, it will be apparent to those skilled in the art to which the inventions pertain that variations and modifications of the various implementations shown and described herein may be made without departing from the scope of the present application as defined by the appended claims.

## Claims

1. A computer-implemented method of detecting abnormal traffic events (525) in a geographical location, the method comprising:
determining (704) traffic objects in real time based on a traffic environment in the geographical location, wherein the traffic environment is obtained from image processing devices located in the geographic location, and comprises vehicular traffic and pedestrian traffic;
determining (712) a traffic activity in real time by tracking the traffic objects in the geographical location based on object boundaries associated with the traffic objects, wherein the traffic activity comprises a plurality of object trajectories including location, position, and the object boundaries associated with the traffic objects;
detecting (716) anomalous object trajectories of the plurality of object trajectories in real-time based on a predefined threshold, the anomalous object trajectories being associated with anomalous traffic objects (535a) of the traffic objects that cause the abnormal traffic events (525), wherein detecting (716) the anomalous object trajectories comprises:
generating one or more non-anomalous object trajectories from historical traffic environment;
determining a reconstruction error in object trajectories in the traffic environment of the plurality of object trajectories, and
detecting the anomalous object trajectories when the reconstruction error in the object trajectories in the traffic environment exceeds the predefined threshold, wherein the predefined threshold is learnt autonomously from a historical traffic environment using reward based optimization model;
and
detecting (718) the abnormal traffic events (525) in the geographical location by detecting the anomalous object trajectories from the traffic activity.

2. The method according to claim 1, further comprising:
capturing (702) the traffic environment in real-time at a plurality of capture nodes in the geographical location, and
wherein the traffic objects include a road, a road type, a road condition, a vehicle type, a vehicle occupancy, and a pedestrian type.

3. The method according to claim 2, wherein determining (704) the traffic objects in the traffic environment in real time comprises:
capturing a traffic image (530) associated with the traffic environment,
identifying features in the traffic image (530) through a combination of convolutional layers, pooling layers, and activation layers, based on a predetermined identification model, and
recognizing the traffic objects independent of a vehicle position, a relative vehicle proximity and a pedestrian position based on the identified features;
and in particular further comprising training (708) the predetermined identification model with object bounding boxes associated with object co-ordinates, widths, and heights of the traffic objects in the traffic image.

4. The method according to claim 1, wherein determining (712) the traffic activity in real time by tracking the traffic objects in the geographical location based on object boundaries comprises:
detecting object co-ordinates associated with the traffic objects in traffic images of the traffic environment;
determining object boundaries from the object co-ordinates; and
determining the traffic activity by tracking the traffic objects in the geographical location based on the object boundaries;
wherein determining object boundaries from the object co-ordinates in particular comprises:
interpolating the object co-ordinates to track the traffic objects at predetermined intervals;
generating a pixel label for pixels in a traffic image (530) associated with the traffic environment, wherein the pixel label is generated by labelling the pixels in terms of the traffic objects; and
determining the object boundaries based on one of the interpolated object co-ordinates and the pixel label.

5. The method according to claim 1, wherein detecting (718) the abnormal traffic events (525) in the geographical location by detecting the anomalous object trajectories from the traffic activity comprises:
identifying anomalous traffic objects (535a) in real-time;
detecting anomalous object trajectories associated with the anomalous traffic objects (535a) based on historic co-ordinates and current co-ordinates of the anomalous traffic objects (535a); and
detecting the abnormal traffic events (525) in the geographical location based on the anomalous object trajectories.

6. The method according to claim 5, further comprising:
updating a tracking list with the anomalous traffic objects (535a) and the anomalous object trajectories, wherein the tracking list includes the traffic activity of the traffic objects in the geographical location;
wherein updating the tracking list with the anomalous traffic objects (535a) and the anomalous object trajectories, comprises:
detecting a unique identification of the anomalous traffic objects (535a) across one or more capture nodes, wherein the unique identification of the anomalous traffic objects (535a) are determined by matching one or more identifying features associated with the anomalous traffic objects (535a) across the capture nodes.

7. The method according to claim 5, wherein detecting the anomalous object trajectories associated with the anomalous traffic objects (535a) in real-time comprises:
detecting the anomalous object trajectories based on an interaction between boundaries of pixel labels for pixels in a traffic image (530) associated with the traffic environment, wherein the pixel label is generated by labelling the pixels in terms of the traffic objects; and
detecting the anomalous object trajectories based on an interaction between boundaries of object bounding boxes for the traffic objects, wherein the object bounding boxes are denoted by object co-ordinates, widths and heights of the traffic objects.

8. The method according to claim 1, further comprising:
determining (724) a type of event by classifying the abnormal traffic events (525) as one of a traffic violation, a traffic accident and both;
determining (722) a severity of casualty of the abnormal traffic events (525) based on a pre-trained severity estimation model,
wherein the pre-trained severity model is based on a number of event objects, event trajectories associated with the event objects, and a type of the event objects,
wherein the event objects comprise traffic objects associated with the abnormal traffic events (525) including one or more anomalous traffic objects (535a), and
wherein the event trajectories comprise historical object trajectories of the event objects; and
initiating communication (726) with at least one mitigation agency based on the type of event and the severity of casualty.

9. A computing device (200, 550) for detecting abnormal traffic events (525) in a geographical location, the computing device (200, 550) comprising:
at least one processor (202); and
a memory (204) coupled to the at least one processor, the memory comprising:
a traffic object identification module (210) configured to determine (704) traffic objects in real time based on a traffic environment in the geographical location, wherein the traffic environment is obtained from image processing devices located in the geographic location, and comprises vehicular traffic and pedestrian traffic;
a traffic tracking module (220) configured to determine (712) a traffic activity in real time by tracking the traffic objects in the geographical location based on object boundaries associated with the traffic objects, wherein the traffic activity comprises a plurality of object trajectories including location, position, and the object boundaries associated with the traffic objects; and
a traffic event module (240) configured to:
detect (716) anomalous object trajectories of the plurality of object trajectories in real-time based on a predefined threshold, the anomalous object trajectories being associated with anomalous traffic objects (535a) of the traffic objects that cause the abnormal traffic events (525), wherein detecting (716) the anomalous object trajectories comprises:
determining a reconstruction error in object trajectories in the traffic environment of the plurality of object trajectories, and
detecting the anomalous object trajectories when the reconstruction error in the object trajectories exceeds the predefined threshold, wherein the predefined threshold is learnt autonomously
from a historical traffic environment; and
detecting (718) the abnormal traffic events (525) in the geographical location by detecting the anomalous object trajectories from the traffic activity.

10. The computing device (200, 550) as claimed in claim 9, wherein the computing device (200, 550) further comprises:
a communication unit (208) configured to communicate (726) the abnormal traffic events (525) to at least one mitigation agency for mitigating an effect of the abnormal traffic events (525) in the geographical location.

11. The computing device (200, 550) as claimed in claim 9 or 10, wherein the traffic object identification module further comprises:
a feature identification module (212) configured to identify features in the traffic image (530) through a combination of convolutional layers, pooling layers, and activation layers, based on a predetermined identification model,
wherein the traffic object identification module is configured to determine traffic objects independent of a vehicle position, a relative vehicle proximity and a pedestrian position in the traffic environment based on the identified features, and
wherein the traffic objects include a road, a road type, a road condition, a vehicle type, a vehicle occupancy, and a pedestrian type.

12. The computing device (200, 550) as claimed in claim 9 10, wherein the traffic tracking module further comprises:
an object module (222) configured to detect object co-ordinates associated with the traffic objects in traffic images of the traffic environment;
an interpolation module (224) configured to interpolate the object co-ordinates and track the traffic objects at predetermined intervals;
a segmentation module (226) configured to generate a pixel label for pixels in a traffic image (530) associated with the traffic environment, wherein the pixel label is generated by labelling the pixels in terms of the traffic objects;
an object boundary module (228) configured to determine the object boundaries based on one of the interpolated object co-ordinates and the pixel label; and
a tracking list module (230) configured to update a tracking list with the anomalous traffic objects (535a) and the anomalous object trajectories, wherein the tracking list includes the traffic activity of the traffic objects in the geographical location.

13. The computing device (200, 550) as claimed in claim 9 or 10, wherein the traffic event module (240) comprises:
an anomalous activity detection module (242) configured to:
identify anomalous traffic objects (535a) in real-time,
detect anomalous object trajectories associated with the anomalous traffic objects (535a) based on historic co-ordinates and current co-ordinates of the anomalous traffic objects (535a), and
detecting the abnormal traffic events (525) in the geographical location based on the anomalous object trajectories;
a unique identification module (244) configured to detect a unique identification of the anomalous traffic objects (535a) across one or more capture nodes, wherein the unique identification of the anomalous traffic objects (535a) are determined by matching one or more identifying features associated with the anomalous traffic objects (535a) across the capture nodes;
an event classification module (246) configured to determine a type of event by classifying the abnormal traffic events (525) as one of a traffic violation, a traffic accident and both; and
a casualty estimation module (248) to determine a severity of casualty of the abnormal traffic events (525) based on a pre-trained severity estimation model,
wherein the pre-trained severity estimation model is based on a number of event objects, event trajectories associated with the event objects, and a type of the event objects,
wherein the event objects comprise traffic objects associated with the abnormal traffic events (525) including one or more anomalous traffic objects (535a), and
wherein the event trajectories comprise historical object trajectories of the event objects.

14. A system (100) for detecting abnormal traffic events (525) in a geographical location, the system (100) comprising:
a server (102);
a network (108) communicatively coupled to the server (102); and
one or more computing devices (150) as claimed in claim 13 and communicatively coupled to the server (102) via the network (108);
wherein the one or more computing devices (150) are provided at one or more capture nodes in the geographical location.

## Patentansprüche

1. Computerimplementiertes Verfahren zum Detektieren von anormalen Verkehrsereignissen (525) an einem geografischen Ort, das Verfahren umfassend:
Bestimmen (704) von Verkehrsobjekten in Echtzeit basierend auf einer Verkehrsumgebung an dem geografischen Ort, wobei die Verkehrsumgebung von Bildverarbeitungsvorrichtungen, die an dem geografischen Ort angeordnet sind, erlangt wird und Fahrzeugverkehr und Fußgängerverkehr umfasst;
Bestimmen (712) einer Verkehrsaktivität in Echtzeit durch Verfolgen der Verkehrsobjekte an dem geografischen Ort basierend auf Objektbegrenzungen, die mit den Verkehrsobjekten assoziiert sind, wobei die Verkehrsaktivität eine Vielzahl von Objektbewegungsbahnen umfasst, die Ort, Position und die Objektbegrenzungen, die mit den Verkehrsobjekten assoziiert sind, enthalten;
Detektieren (716) von anomalen Objektbewegungsbahnen der Vielzahl von Objektbewegungsbahnen in Echtzeit basierend auf einem im Voraus definierten Schwellenwert, wobei die anomalen Objektbewegungsbahnen mit anomalen Verkehrsobjekten (535a) der Verkehrsobjekte, die die anormalen Verkehrsereignisse (525) verursachen, assoziiert sind, wobei Detektieren (716) der anomalen Objektbewegungsbahnen umfasst:
Erzeugen einer oder mehrerer nicht anomalen Objektbewegungsbahnen aus einer historischen Verkehrsumgebung;
Bestimmen eines Rekonstruktionsfehlers in Objektbewegungsbahnen in der Verkehrsumgebung der Vielzahl von Objektbewegungsbahnen und
Detektieren der anomalen Objektbewegungsbahnen, wenn der Rekonstruktionsfehler in den Objektbewegungsbahnen in der Verkehrsumgebung den im Voraus definierten Schwellenwert übersteigt, wobei der im Voraus definierte Schwellenwert aus einer historischen Verkehrsumgebung unter Verwendung eines belohnungsbasierten Optimierungsmodells autonom gelernt wird; und
Detektieren (718) der anormalen Verkehrsereignisse (525) an dem geografischen Ort durch Detektieren der anomalen Objektbewegungsbahnen aus der Verkehrsaktivität.

2. Verfahren nach Anspruch 1, ferner umfassend:
Erfassen (702) der Verkehrsumgebung in Echtzeit an einer Vielzahl von Erfassungsknoten an dem geografischen Ort und
wobei die Verkehrsobjekte eine Straße, einen Straßentyp, einen Straßenzustand, einen Fahrzeugtyp, eine Fahrzeugbesetzung und einen Fußgängertyp enthalten.

3. Verfahren nach Anspruch 2, wobei Bestimmen (704) der Verkehrsobjekte in der Verkehrsumgebung in Echtzeit umfasst:
Erfassen eines Verkehrsbilds (530), das mit der Verkehrsumgebung assoziiert ist,
Identifizieren von Merkmalen in dem Verkehrsbild (530) durch eine Kombination von Faltungsschichten, Zusammenfassungsschichten und Aktivierungsschichten basierend auf einem im Voraus bestimmten Identifikationsmodell und
Erkennen der Verkehrsobjekte unabhängig von einer Fahrzeugposition, einer relativen Fahrzeugnähe und einer Fußgängerposition basierend auf den identifizierten Merkmalen;
und insbesondere ferner umfassend Trainieren (708) des im Voraus bestimmten Identifikationsmodells mit Objektbegrenzungsrahmen, die mit Objektkoordinaten, -breiten und -höhen der Verkehrsobjekte in dem Verkehrsbild assoziiert sind.

4. Verfahren nach Anspruch 1, wobei Bestimmen (712) der Verkehrsaktivität in Echtzeit durch Verfolgen der Verkehrsobjekte an dem geografischen Ort basierend auf Objektbegrenzungen umfasst:
Detektieren von Objektkoordinaten, die mit den Verkehrsobjekten in Verkehrsbildern der Verkehrsumgebung assoziiert sind;
Bestimmen von Objektbegrenzungen aus den Objektkoordinaten; und
Bestimmen der Verkehrsaktivität durch Verfolgen der Verkehrsobjekte an dem geografischen Ort basierend auf den Objektbegrenzungen;
wobei Bestimmen von Objektbegrenzungen aus den Objektkoordinaten insbesondere umfasst:
Interpolieren der Objektkoordinaten, um die Verkehrsobjekte in im Voraus bestimmten Intervallen zu verfolgen;
Erzeugen einer Bildpunktkennzeichnung für Bildpunkte in einem Verkehrsbild (530), das mit der Verkehrsumgebung assoziiert ist, wobei die Bildpunktkennzeichnung durch Kennzeichnen der Bildpunkte in Bezug auf die Verkehrsobjekte erzeugt wird; und
Bestimmen der Objektbegrenzungen basierend auf einer der interpolierten Objektkoordinaten und der Bildpunktkennzeichnung.

5. Verfahren nach Anspruch 1, wobei Detektieren (718) der anormalen Verkehrsereignisse (525) an dem geografischen Ort durch Detektieren der anomalen Objektbewegungsbahnen aus der Verkehrsaktivität umfasst:
Identifizieren von anomalen Verkehrsobjekten (535a) in Echtzeit;
Detektieren von anomalen Objektbewegungsbahnen, die mit den anomalen Verkehrsobjekten (535a) assoziiert sind, basierend auf historischen Koordinaten und gegenwärtigen Koordinaten der anomalen Verkehrsobjekte (535a); und
Detektieren der anormalen Verkehrsereignisse (525) an dem geografischen Ort basierend auf den anomalen Objektbewegungsbahnen.

6. Verfahren nach Anspruch 5, ferner umfassend:
Aktualisieren einer Verfolgungsliste mit den anomalen Verkehrsobjekten (535a) und den anomalen Objektbewegungsbahnen, wobei die Verfolgungsliste die Verkehrsaktivität der Verkehrsobjekte an dem geografischen Ort enthält;
wobei Aktualisieren der Verfolgungsliste mit den anomalen Verkehrsobjekten (535a) und den anomalen Objektbewegungsbahnen umfasst:
Detektieren einer eindeutigen Identifikation der anomalen Verkehrsobjekte (535a) über einen oder mehrere Erfassungsknoten, wobei die eindeutige Identifikation der anomalen Verkehrsobjekte (535a) durch Abgleichen einer oder mehrerer identifizierender Merkmale, die mit den anomalen Verkehrsobjekten (535a) assoziiert sind, über die Erfassungsknoten bestimmt wird.

7. Verfahren nach Anspruch 5, wobei Detektieren der anomalen Objektbewegungsbahnen, die mit den anomalen Verkehrsobjekten (535a) assoziiert sind, in Echtzeit umfasst:
Detektieren der anomalen Objektbewegungsbahnen basierend auf einer Interaktion zwischen Begrenzungen von Bildpunktkennzeichnungen für Bildpunkte in einem Verkehrsbild (530), das mit der Verkehrsumgebung assoziiert ist, wobei die Bildpunktkennzeichnung durch Kennzeichnen der Bildpunkte in Bezug auf die Verkehrsobjekte erzeugt wird; und
Detektieren der anomalen Objektbewegungsbahnen basierend auf einer Interaktion zwischen Begrenzungen von Objektbegrenzungsrahmen für die Verkehrsobjekte, wobei die Objektbegrenzungsrahmen durch Objektkoordinaten, -breiten und -höhen der Verkehrsobjekte bezeichnet werden.

8. Verfahren nach Anspruch 1, ferner umfassend:
Bestimmen (724) eines Ereignistyps durch Klassifizieren der anormalen Verkehrsereignisse (525) als eines eines Verkehrsverstoßes, eines Verkehrsunfalls und beider;
Bestimmen (722) eines Schaden-Schweregrads der anormalen Verkehrsereignisse (525) basierend auf einem im Voraus trainierten Schweregrad-Schätzungsmodell,
wobei das im Voraus trainierte Schweregradmodell auf einer Anzahl von Ereignisobjekten, Ereignisbewegungsbahnen, die mit den Ereignisobjekten assoziiert sind, und einem Typ der Ereignisobjekte basiert,
wobei die Ereignisobjekte Verkehrsobjekte, die mit den anormalen Verkehrsereignissen (525) assoziiert sind, einschließlich eines oder mehrerer anomaler Verkehrsobjekte (535a) umfassen und
wobei die Ereignisbewegungsbahnen historische Objektbewegungsbahnen der Ereignisobjekte umfassen; und
Einleiten von Kommunikation (726) mit mindestens einer Mitigationsagentur basierend auf dem Ereignistyp und dem Schaden-Schweregrad.

9. Berechnungsvorrichtung (200, 550) zum Detektieren von anormalen Verkehrsereignissen (525) an einem geografischen Ort, die Berechnungsvorrichtung (200, 550) umfassend:
mindestens einen Prozessor (202); und
einen Speicher (204), der an den mindestens einen Prozessor gekoppelt ist, der Speicher umfassend:
ein Verkehrsobjekt-Identifikationsmodul (210), konfiguriert zum Bestimmen (704) von Verkehrsobjekten in Echtzeit basierend auf einer Verkehrsumgebung an dem geografischen Ort, wobei die Verkehrsumgebung von Bildverarbeitungsvorrichtungen, die an dem geografischen Ort angeordnet sind, erlangt wird und Fahrzeugverkehr und Fußgängerverkehr umfasst;
ein Verkehrsverfolgungsmodul (220), konfiguriert zum Bestimmen (712) einer Verkehrsaktivität in Echtzeit durch Verfolgen der Verkehrsobjekte an dem geografischen Ort basierend auf Objektbegrenzungen, die mit den Verkehrsobjekten assoziiert sind, wobei die Verkehrsaktivität eine Vielzahl von Objektbewegungsbahnen umfasst, die Ort, Position und die Objektbegrenzungen, die mit den Verkehrsobjekten assoziiert sind, enthalten; und
ein Verkehrsereignismodul (240), konfiguriert zum:
Detektieren (716) von anomalen Objektbewegungsbahnen der Vielzahl von Objektbewegungsbahnen in Echtzeit basierend auf einem im Voraus definierten Schwellenwert, wobei die anomalen Objektbewegungsbahnen mit anomalen Verkehrsobjekten (535a) der Verkehrsobjekte, die die anormalen Verkehrsereignisse (525) verursachen, assoziiert sind, wobei Detektieren (716) der anomalen Objektbewegungsbahnen umfasst:
Bestimmen eines Rekonstruktionsfehlers in Objektbewegungsbahnen in der Verkehrsumgebung der Vielzahl von Objektbewegungsbahnen und
Detektieren der anomalen Objektbewegungsbahnen, wenn der Rekonstruktionsfehler in den Objektbewegungsbahnen den im Voraus definierten Schwellenwert übersteigt, wobei der im Voraus definierte Schwellenwert aus einer historischen Verkehrsumgebung autonom gelernt wird; und
Detektieren (718) der anormalen Verkehrsereignisse (525) an dem geografischen Ort durch Detektieren der anomalen Objektbewegungsbahnen aus der Verkehrsaktivität.

10. Berechnungsvorrichtung (200, 550) nach Anspruch 9, wobei die Berechnungsvorrichtung (200, 550) ferner umfasst:
eine Kommunikationseinheit (208), konfiguriert zum Kommunizieren (726) der anormalen Verkehrsereignisse (525) an mindestens eine Mitigationsagentur zum Mitigieren einer Auswirkung der anormalen Verkehrsereignisse (525) an dem geografischen Ort.

11. Berechnungsvorrichtung (200, 550) nach Anspruch 9 oder 10, wobei das Verkehrsobjekt-Identifikationsmodul ferner umfasst:
ein Merkmalsidentifikationsmodul (212), konfiguriert zum Identifizieren von Merkmalen in dem Verkehrsbild (530) durch eine Kombination von Faltungsschichten, Zusammenfassungsschichten und Aktivierungsschichten basierend auf einem im Voraus bestimmten Identifikationsmodell,
wobei das Verkehrsobjekt-Identifikationsmodul konfiguriert ist zum Bestimmen von Verkehrsobjekten unabhängig von einer Fahrzeugposition, einer relativen Fahrzeugnähe und einer Fußgängerposition in der Verkehrsumgebung basierend auf den identifizierten Merkmalen und
wobei die Verkehrsobjekte eine Straße, einen Straßentyp, einen Straßenzustand, einen Fahrzeugtyp, eine Fahrzeugbesetzung und einen Fußgängertyp enthalten.

12. Berechnungsvorrichtung (200, 550) nach Anspruch 9 oder 10, wobei das Verkehrsverfolgungsmodul ferner umfasst:
ein Objektmodul (222), konfiguriert zum Detektieren von Objektkoordinaten, die mit den Verkehrsobjekten in Verkehrsbildern der Verkehrsumgebung assoziiert sind;
ein Interpolationsmodul (224), konfiguriert zum Interpolieren der Objektkoordinaten und Verfolgen der Verkehrsobjekte in im Voraus bestimmten Intervallen;
ein Segmentierungsmodul (226), konfiguriert zum Erzeugen einer Bildpunktkennzeichnung für Bildpunkte in einem Verkehrsbild (530), das mit der Verkehrsumgebung assoziiert ist, wobei die Bildpunktkennzeichnung durch Kennzeichnen der Bildpunkte in Bezug auf die Verkehrsobjekte erzeugt wird;
ein Objektbegrenzungsmodul (228), konfiguriert zum Bestimmen der Objektbegrenzungen basierend auf einer der interpolierten Objektkoordinaten und der Bildpunktkennzeichnung; und
ein Verfolgungslistenmodul (230), konfiguriert zum Aktualisieren einer Verfolgungsliste mit den anomalen Verkehrsobjekten (535a) und den anomalen Objektbewegungsbahnen, wobei die Verfolgungsliste die Verkehrsaktivität der Verkehrsobjekte an dem geografischen Ort enthält.

13. Berechnungsvorrichtung (200, 550) nach Anspruch 9 oder 10, wobei das Verkehrsereignismodul (240) umfasst:
ein Modul zum Detektieren von anomaler Aktivität (242), konfiguriert zum:
Identifizieren von anomalen Verkehrsobjekten (535a) in Echtzeit,
Detektieren von anomalen Objektbewegungsbahnen, die mit den anomalen Verkehrsobjekten (535a) assoziiert sind, basierend auf historischen Koordinaten und gegenwärtigen Koordinaten der anomalen Verkehrsobjekte (535a) und
Detektieren der anormalen Verkehrsereignisse (525) an dem geografischen Ort basierend auf den anomalen Objektbewegungsbahnen;
ein Modul für eindeutige Identifikation (244), konfiguriert zum Detektieren einer eindeutigen Identifikation der anomalen Verkehrsobjekte (535a) über einen oder mehrere Erfassungsknoten, wobei die eindeutige Identifikation der anomalen Verkehrsobjekte (535a) durch Abgleichen einer oder mehrerer identifizierender Merkmale, die mit den anomalen Verkehrsobjekten (535a) assoziiert sind, über die Erfassungsknoten bestimmt wird;
ein Ereignisklassifizierungsmodul (246), konfiguriert zum Bestimmen eines Ereignistyps durch Klassifizieren der anormale Verkehrsereignisse (525) als eines eines Verkehrsverstoßes, eines Verkehrsunfalls und beider; und
ein Schadenschätzungsmodul (248) zum Bestimmen eines Schaden-Schweregrads der anormalen Verkehrsereignisse (525) basierend auf einem im Voraus trainierten Schweregrad-Schätzungsmodell,
wobei das im Voraus trainierte Schweregrad-Schätzungsmodell auf einer Anzahl von Ereignisobjekten, Ereignisbewegungsbahnen, die mit den Ereignisobjekten assoziiert sind, und einem Typ der Ereignisobjekte basiert,
wobei die Ereignisobjekte Verkehrsobjekte umfassen, die mit den anormalen Verkehrsereignissen (525) assoziiert sind, einschließlich eines oder mehrerer anomaler Verkehrsobjekte (535a), und
wobei die Ereignisbewegungsbahnen historische Objektbewegungsbahnen der Ereignisobjekte umfassen.

14. System (100) zum Detektieren von anormalen Verkehrsereignissen (525) an einem geografischen Ort, das System (100) umfassend:
einen Server (102);
ein Netzwerk (108), das an den Server (102) kommunikativ gekoppelt ist; und
eine oder mehrere Berechnungsvorrichtungen (150) nach Anspruch 13 und die an den Server (102) über das Netzwerk (108) kommunikativ gekoppelt sind;
wobei die eine oder mehreren Berechnungsvorrichtungen (150) an einem oder mehreren Erfassungsknoten an dem geografischen Ort bereitgestellt sind.

## Revendications

1. Procédé mis en œuvre par ordinateur de détection d'événements de trafic anormaux (525) à un emplacement géographique, le procédé comprenant :
la détermination (704) d'objets de trafic en temps réel sur la base d'un environnement de trafic à l'emplacement géographique, dans lequel l'environnement de trafic est obtenu à partir de dispositifs de traitement d'images situés à l'emplacement géographique, et comprend un trafic véhiculaire et un trafic piétonnier ;
la détermination (712) d'une activité de trafic en temps réel en suivant les objets de trafic à l'emplacement géographique sur la base de limites d'objets associées aux objets de trafic, dans lequel l'activité de trafic comprend une pluralité de trajectoires d'objets comportant l'emplacement, la position et les limites d'objets associées aux objets de trafic ;
la détection (716) de trajectoires d'objets anormales de la pluralité de trajectoires d'objets en temps réel sur la base d'un seuil prédéfini, les trajectoires d'objets anormales étant associées à des objets de trafic anormaux (535a) des objets de trafic qui causent les événements de trafic anormaux (525), dans lequel la détection (716) des trajectoires d'objets anormales comprend :
la génération d'une ou plusieurs trajectoires d'objets non anormales à partir d'un environnement de trafic historique ;
la détermination d'une erreur de reconstruction dans des trajectoires d'objets dans l'environnement de trafic de la pluralité de trajectoires d'objets, et
la détection des trajectoires d'objets anormales lorsque l'erreur de reconstruction dans les trajectoires d'objets dans l'environnement de trafic dépasse le seuil prédéfini, dans lequel le seuil prédéfini est appris de manière autonome à partir d'un environnement de trafic historique à l'aide d'un modèle d'optimisation basé sur les récompenses ; et
la détection (718) des événements de trafic anormaux (525) à l'emplacement géographique en détectant les trajectoires d'objets anormales à partir de l'activité de trafic.

2. Procédé selon la revendication 1, comprenant en outre :
la capture (702) de l'environnement de trafic en temps réel au niveau d'une pluralité de noeuds de capture à l'emplacement géographique, et
dans lequel les objets de trafic comportent une route, un type de route, un état de route, un type de véhicule, une occupation de véhicule et un type de piéton.

3. Procédé selon la revendication 2, dans lequel la détermination (704) des objets de trafic dans l'environnement de trafic en temps réel comprend :
la capture d'une image de trafic (530) associée à l'environnement de trafic,
l'identification de caractéristiques dans l'image de trafic (530) à travers une combinaison de couches convolutives, de couches de regroupement et de couches d'activation, sur la base d'un modèle d'identification prédéterminé, et
la reconnaissance des objets de trafic indépendamment d'une position de véhicule, d'une proximité de véhicule relative et d'une position de piéton sur la base des caractéristiques identifiées ;
et en particulier comprenant en outre l'entraînement (708) du modèle d'identification prédéterminé avec des boîtes englobantes d'objets associées à des coordonnées d'objets, largeurs et hauteurs des objets de trafic dans l'image de trafic.

4. Procédé selon la revendication 1, dans lequel la détermination (712) de l'activité de trafic en temps réel par le suivi des objets de trafic à l'emplacement géographique sur la base de limites d'objets comprend :
la détection de coordonnées d'objets associées aux objets de trafic dans des images de trafic de l'environnement de trafic ;
la détermination de limites d'objets à partir des coordonnées d'objets ; et
la détermination de l'activité de trafic en suivant les objets de trafic à l'emplacement géographique sur la base des limites d'objets ;
dans lequel la détermination des limites d'objets à partir des coordonnées d'objets comprend en particulier :
l'interpolation des coordonnées d'objet pour suivre les objets de trafic à des intervalles prédéterminés ;
la génération d'une étiquette de pixel pour des pixels dans une image de trafic (530) associée à l'environnement de trafic, dans lequel l'étiquette de pixel est générée en étiquetant les pixels en termes d'objets de trafic ; et
la détermination des limites d'objets à l'aide d'une des coordonnées d'objets interpolées et de l'étiquette de pixel.

5. Procédé selon la revendication 1, dans lequel la détection (718) des événements de trafic anormaux (525) à l'emplacement géographique en détectant les trajectoires d'objets anormales à partir de l'activité de trafic comprend :
l'identification en temps réel d'objets de trafic anormaux (535a) ;
la détection de trajectoires d'objets anormales associées aux objets de trafic anormaux (535a) sur la base de coordonnées historiques et de coordonnées actuelles des objets de trafic anormaux (535a) ; et
la détection des événements de trafic anormaux (525) à l'emplacement géographique sur la base des trajectoires d'objets anormales.

6. Procédé selon la revendication 5, comprenant en outre :
la mise à jour d'une liste de suivi avec les objets de trafic anormaux (535a) et les trajectoires d'objets anormales, dans lequel la liste de suivi comporte l'activité de trafic des objets de trafic à l'emplacement géographique ;
dans lequel la mise à jour de la liste de suivi avec les objets de trafic anormaux (535a) et les trajectoires d'objets anormales comprend :
la détection d'une identification unique des objets de trafic anormaux (535a) sur un ou plusieurs noeuds de capture, dans lequel l'identification unique des objets de trafic anormaux (535a) est déterminée en faisant correspondre une ou plusieurs caractéristiques d'identification associées aux objets de trafic anormaux (535a) sur les noeuds de capture.

7. Procédé selon la revendication 5, dans lequel la détection des trajectoires d'objets anormales associées aux objets de trafic anormaux (535a) en temps réel comprend :
la détection des trajectoires d'objets anormales sur la base d'une interaction entre des limites d'étiquettes de pixels pour des pixels dans une image de trafic (530) associée à l'environnement de trafic, dans lequel l'étiquette de pixel est générée en étiquetant les pixels en termes d'objets de trafic ; et
la détection des trajectoires d'objets anormales sur la base d'une interaction entre des limites de boîtes englobantes d'objets pour les objets de trafic, dans lequel les boîtes englobantes d'objets sont désignées par des coordonnées d'objets, des largeurs et des hauteurs des objets de trafic.

8. Procédé selon la revendication 1, comprenant en outre :
la détermination (724) d'un type d'événement en classant les événements de trafic anormaux (525) comme une infraction au code de la route, un accident de la circulation et les deux ;
la détermination (722) d'une gravité de dommage des événements de trafic anormaux (525) sur la base d'un modèle d'estimation de gravité pré-entraîné,
dans lequel le modèle de gravité pré-entraîné est basé sur un nombre d'objets d'événement, des trajectoires d'événement associées aux objets d'événement, et un type des objets d'événement,
dans lequel les objets d'événement comprennent des objets de trafic associés aux événements de trafic anormaux (525) compotant un ou plusieurs objets de trafic anormaux (535a), et
dans lequel les trajectoires d'événements comprennent des trajectoires d'objets historiques des objets d'événement ; et
l'établissement d'une communication (726) avec au moins un organisme d'atténuation en fonction du type d'événement et de la gravité du dommage.

9. Dispositif informatique (200, 550) de détection d'événements de trafic anormaux (525) à un emplacement géographique, le dispositif informatique (200, 550) comprenant :
au moins un processeur (202) ; et
une mémoire (204) couplée à l'au moins un processeur, la mémoire comprenant :
un module d'identification d'objets de trafic (210) configuré pour déterminer (704) des objets de trafic en temps réel sur la base d'un environnement de trafic à l'emplacement géographique, dans lequel l'environnement de trafic est obtenu à partir de dispositifs de traitement d'images situés à l'emplacement géographique, et comprend un trafic véhiculaire et un trafic piétonnier ;
un module de suivi de trafic (220) configuré pour déterminer (712) une activité de trafic en temps réel en suivant les objets de trafic à l'emplacement géographique sur la base de limites d'objets associées aux objets de trafic, dans lequel l'activité de trafic comprend une pluralité de trajectoires d'objets comportant l'emplacement, la position et les limites d'objets associées aux objets de trafic ; et
un module d'événement de trafic (240) configuré pour :
détecter (716) des trajectoires d'objets anormales de la pluralité de trajectoires d'objets en temps réel sur la base d'un seuil prédéfini, les trajectoires d'objets anormales étant associées à des objets de trafic anormaux (535a) des objets de trafic qui causent les événements de trafic anormaux (525), dans lequel la détection (716) des trajectoires d'objets anormales comprend :
la détermination d'une erreur de reconstruction dans des trajectoires d'objets dans l'environnement de trafic de la pluralité de trajectoires d'objets, et
la détection des trajectoires d'objets anormales lorsque l'erreur de reconstruction dans les trajectoires d'objets dépasse le seuil prédéfini, dans lequel le seuil prédéfini est appris de manière autonome à partir d'un environnement de trafic historique ; et
la détection (718) des événements de trafic anormaux (525) à l'emplacement géographique en détectant les trajectoires d'objets anormales à partir de l'activité de trafic.

10. Dispositif informatique (200, 550) selon la revendication 9, le dispositif informatique (200, 550) comprenant en outre :
une unité de communication (208) configurée pour communiquer (726) les événements de trafic anormaux (525) à au moins un organisme d'atténuation afin d'atténuer un effet des événements de trafic anormaux (525) à l'emplacement géographique.

11. Dispositif informatique (200, 550) selon la revendication 9 ou 10, dans lequel le module d'identification d'objets de trafic comprend en outre :
un module d'identification de caractéristiques (212) configuré pour identifier des caractéristiques dans l'image de trafic (530) à travers une combinaison de couches convolutives, de couches de regroupement et de couches d'activation, sur la base d'un modèle d'identification prédéterminé,
dans lequel le module d'identification d'objet de trafic est configuré pour déterminer des objets de trafic indépendamment d'une position de véhicule, d'une proximité de véhicule relative véhicule et d'une position de piéton dans l'environnement de trafic sur la base des caractéristiques identifiées, et
dans lequel les objets de trafic comportent une route, un type de route, un état de route, un type de véhicule, une occupation de véhicule et un type de piéton.

12. Dispositif informatique (200, 550) selon la revendication 9 ou 10, dans lequel le module de suivi de trafic comprend en outre :
un module d'objet (222) configuré pour détecter des coordonnées d'objets associées aux objets de trafic dans des images de trafic de l'environnement de trafic ;
un module d'interpolation (224) configuré pour interpoler les coordonnées d'objets et suivre les objets de trafic à des intervalles prédéterminés ;
un module de segmentation (226) configuré pour générer une étiquette de pixel pour des pixels dans une image de trafic (530) associée à l'environnement de trafic, dans lequel l'étiquette de pixel est générée en étiquetant les pixels en termes d'objets de trafic ;
un module de limites d'objets (228) configuré pour déterminer les limites d'objets sur la base d'une des coordonnées d'objets interpolées et de l'étiquette de pixel ; et
un module de liste de suivi (230) configuré pour mettre à jour une liste de suivi avec les objets de trafic anormaux (535a) et les trajectoires d'objets anormales, dans lequel la liste de suivi comporte l'activité de trafic des objets de trafic à l'emplacement géographique.

13. Dispositif informatique (200, 550) selon la revendication 9 ou 10, dans lequel le module d'événement de trafic (240) comprend :
un module de détection d'activité anormale (242) configuré pour :
identifier en temps réel des objets de trafic anormaux (535a),
détecter des trajectoires d'objets anormales associées aux objets de trafic anormaux (535a) sur la base de coordonnées historiques et de coordonnées actuelles des objets de trafic anormaux (535a), et
détecter les événements de trafic anormaux (525) à l'emplacement géographique sur la base des trajectoires d'objets anormales ;
un module d'identification unique (244) configuré pour détecter une identification unique des objets de trafic anormaux (535a) sur un ou plusieurs noeuds de capture, dans lequel l'identification unique des objets de trafic anormaux (535a) est déterminée en faisant correspondre une ou plusieurs caractéristiques d'identification associées aux objets de trafic anormaux (535a) sur les noeuds de capture ;
un module de classification d'événements (246) configuré pour déterminer un type d'événement en classant les événements de trafic anormaux (525) comme l'un d'une infraction au code de la route, d'un accident de la circulation et les deux ; et
un module d'estimation de dommage (248) pour déterminer une gravité de dommage des événements de trafic anormaux (525) sur la base d'un modèle d'estimation de gravité pré-entraîné,
dans lequel le modèle d'estimation de gravité pré-entraîné est basé sur un nombre d'objets d'événements, des trajectoires d'événements associées aux objets d'événements et un type d'objets d'événements,
dans lequel les objets d'événements comprennent des objets de trafic associés aux événements de trafic anormaux (525) comportant un ou plusieurs objets de trafic anormaux (535a), et
dans lequel les trajectoires d'événements comprennent des trajectoires d'objets historiques des objets d'événements.

14. Système (100) de détection d'événements de trafic anormaux (525) à un emplacement géographique, le système (100) comprenant :
un serveur (102) ;
un réseau (108) couplé de manière communicative au serveur (102) ; et
un ou plusieurs dispositifs informatiques (150) selon la revendication 13 et couplés de manière communicative au serveur (102) via le réseau (108) ;
dans lequel les un ou plusieurs dispositifs informatiques (150) sont fournis au niveau d'un ou plusieurs noeuds de capture à l'emplacement géographique.
